# EUROPEAN PATENT SPECIFICATION

(11) **EP 1 264 672 B1**
(45) Date of publication and mention of the grant of the patent: **04.08.2004**
(21) Application number: 02011582.0
(22) Date of filing: 16.01.1998
(51) Int. Cl.: B29C 44/00, B29C 47/74, B29C 44/04, B29C 45/00

(54) **Injection molding of microcellular material**
Spritzgiessen von mikrozelligem Material
Moulage par injection de matière microcellulaire

(30) Priority: 16.01.1997 US 35631; 19.12.1997 US 68350
(43) Date of publication of application: 11.12.2002
(62) Divisional of application: 98902562.2
(73) Proprietor: Trexel, Inc., Woburn, MA 01801 (US)
(72) Inventor: Pierick, David E., San Diego, CA 92127 (US); Anderson, Jere R., Newburyport, MA 01950 (US); Cha, Sung W., Kyungki-Do Koyang-Si Ilsan-Ku, 411-372 (KR); Stevenson, James F., Morristown, NJ 07960 (US); Laing, Dana E., Gloucester, MA 01930 (US)
(74) Representative: HOFFMANN - EITLE

(56) References cited:
- EP-A- 0 799 853
- WO-A-89/00918
- US-A- 5 334 356
- PATENT ABSTRACTS OF JAPAN vol. 096, no. 008, 30 August 1996 (1996-08-30) & JP 08 085129 A (HITACHI LTD), 2 April 1996 (1996-04-02)

## Description

### Field of the Invention

The present invention relates generally to polymeric structural foam processing, and more particularly to a system and a method for producing injection-molded microcellular structural foams.

### Background of the Invention

Structural foamed materials are known, and can be produced by injecting a physical blowing agent into a molten polymeric stream, dispersing the blowing agent in the polymer to form a two-phase mixture of blowing agent cells in polymer, injecting the mixture into a mold having a desired shape, and allowing the mixture to solidify therein. A pressure drop in the mixture can cause the cells in the polymer to grow. As an alternative to a physical blowing agent, a chemical blowing agent can be used which undergoes a chemical reaction in the polymer material causing formation of a gas. Chemical blowing agents generally are low molecular weight organic compounds that decompose at a critical temperature and release a gas such as nitrogen, carbon dioxide, or carbon monoxide. Under some conditions the cells can be made to remain isolated, and a closed-cell foamed material results. Under other, typically more violent foaming conditions, the cells rupture or become interconnected and an open-cell material results. A sample of standard injection molding techniques described in the patent literature follow.

U.S. Patent No. 3,436,446 (Angell) describes a method and apparatus for molding foamed plastic articles with a solid skin by controlling the pressure and temperature of the mold.

U.S. Patent No. 4,479,914 (Baumrucker) describes a foamed article forming method in which a mold cavity is pressurized with gas to prevent premature diffusion of blowing gas from the material injected into the cavity. Pre-pressurization gas is vented during injection of material to be foamed, finally to a vacuum chamber creating a vacuum that draws the material throughout the mold cavity. There are similar disclosures in EP-A-799553, US-A-5 334 356 and WO59/00918.

Microcellular material typically is defined by polymeric foam of very small cell size and various microcellular material is described in U.S. Patent Nos. 5,158,986 and 4,473,665. These patents describe subjecting a single-phase solution of polymeric material and physical blowing agent to thermodynamic instability required to create sites of nucleation of very high density, followed by controlled cell growth to produce microcellular material. U.S. Patent No. 4,473,665 (Martini-Vvedensky) describes a molding system and method for producing microcellular parts. Polymeric pellets are pre-pressurized with a gaseous blowing agent and melted in a conventional extruder to form a solution of blowing agent and molten polymer, which then is extruded into a pressurized mold cavity. The pressure in the mold is maintained above the solubility pressure the gaseous blowing agent at melt temperatures for given initial saturation. When the molded part temperature drops to the appropriate critical nucleation temperature, the pressure on the mold is dropped, typically to ambient, and the part is allowed to foam.

U.S. Patent No. 5,158,986 (Cha et al.) describes an alternative molding system and method for producing microcellular parts. Polymeric pellets are introduced into a conventional extruder and melted. A blowing agent of carbon dioxide in its supercritical state is established the extrusion barrel and mixed to form a homogenous solution of blowing agent and polymeric material. A portion of the extrusion barrel is heated so that as the mixture flows through the barrel, a thermodynamic instability is created, thereby creating sites of nucleation in the molten polymeric material. The nucleated material is extruded into a pressurized mold cavity. Pressure within the mold is maintained by counter pressure of air. Cell growth occurs inside the mold cavity when the mold cavity is expanded and the pressure therein is reduced rapidly; expansion of the mold provides a molded and foamed article having small cell sizes and high cell densities. Nucleation and cell growth occur separately according to the technique; thermally-induced nucleation takes place in the barrel of the extruder, and cell growth takes place in the mold.

While the above and other reports represent several techniques associated with the manufacture of microcellular material and the manufacture of material via injection molding, a need exists in the art for improved microcellular injection molding processes.

It is, therefore, an object of the invention to provide injection molding systems and methods effective in producing microcellular structural foams and, in particular, very thin articles. It is another object to provide systems and methods useful in injection molding of microcellular structural foams, but also useful in injection molding of conventional foams and continuous extrusion of microcellular or conventional foams.

### Summary of the Invention

The present invention is defined in one aspect in system claim 1 below and, in another aspect in method claim 14 below. Preferred embodiments are defined in the dependent claims.

The present invention embraces a system including an extruder having an inlet at an inlet end thereof designed to receive a precursor of microcellular material, molding chamber, and an enclosed passageway connecting the inlet with the molding chamber A passageway is constructed and arranged to receive a non-nucleated, homogeneous, fluid, single-phase solution of a polymeric material and a blowing agent, to contain the non-nucleated, homogeneous fluid single-phase solution of the polymeric material and the blowing agent in a fluid state at an elevated pressure within the passageway and to advance the solution a fluid stream within the passageway in a downstream direction from the inlet end toward the molding chamber. The enclosed passageway includes a nucleating pathway in which blowing agent in the single-phase solution passing therethrough is nucleated. The nucleating pathway is constructed to include a polymer-receiving end which receives a homogeneous fluid, single-phase solution of a polymeric material and a non-nucleated blowing agent, a nucleated polymer releasing end constructed and arranged to release nucleated polymeric material, and a fluid pathway connecting the receiving end to the releasing end. The polymer releasing end defines an orifice of the molding chamber, in fluid communication with the molding chamber. The nucleating pathway is constructed to have length and cross-sectional dimensions such that. when fluid polymer admixed homogeneously with about 6 wt % CO₂ is passed through the pathway at a rate of about 18kg (40 lbs) fluid per hour, create a pressure drop rate in the fluid polymer of at least about 0.1 GPa/sec, or at least about 0.3 GPa/sec, or at least about 1.0 GPa/sec, or at least about 3 GPa/sec. The nucleating pathway can also be constructed to have a variable cross-sectional dimension such that a fluid polymer flowing through the pathway is subjected to a variable pressure drop rate and/or temperature rise.

The invention embraces a system having a molding chamber constructed and arranged to contain nucleated polymeric material at an elevated pressure in order to prevent cell growth at the elevated pressure. The pressurized molding chamber can be fluidly or mechanically pressurized in order to contain the nucleated polymeric material at such an elevated pressure. After reduction of the pressure on the pressurized molding chamber, the polymeric material can solidify the shape of a desired microcellular polymeric article as the molding chamber is constructed and arranged to have such an interior shape. The invention embraces a system having a barrel with an inlet designed to receive a precursor of extruded material, an outlet designed to release a fluid non-nucleated mixture of blowing agent and foamed polymeric article precursor to the precursor, an orifice connectable to a source of the blowing agent, and a screw mounted for reciprocation within the barrel. The extrusion system can also have at least two orifices connectable to a source of the blowing agent and the orifice can be arranged longitudinally along the axis of the barrel in order to sequentially introduce the non-nucleated mixture through at least the two orifices into the barrel as the screw reciprocates. The system can also include a second extrusion barrel connected in tandem with the first barrel where the second barrel has an inlet designed to receive the fluid non-nucleated mixture and has a screw mounted for reciprocation within the barrel.

The invention embraces a method in which a continuous stream of the non-nucleated, fluid, single-phase solution of polymeric precursor and blowing agent is established, nucleating the stream to create a nucleated stream of the mixture, passing the nucleated stream into the enclosure, and allowing the mixture to solidify in the shape of the enclosure. Optionally, the stream can be continuously nucleated by continuously subjecting it to a pressure drop of a rate of at least about 0.1 GPa/sec while passing the stream into the enclosure, to create a continuous stream of nucleated material. Alternatively, the method involves intermittently nucleating the stream by subjecting it to a pressure drop at a rate of at least about 0.1 GPa/sec, while passing the stream into the enclosure so that non-nucleated material passes into the enclosure first, followed by the nucleated material. Conversely, the nucleated stream may be passed into the enclosure so that nucleated material passes into the enclosure, first followed by non-nucleated material. The method also involves removing a solidified microcellular article from the enclosure, and in a period of less than about 10 minutes providing a second nucleated mixture in the enclosure, allowing the second mixture to solidify in the shape of the enclosure, and removing a second solidified microcellular article from the enclosure.

The invention also embraces a method involving accumulating a charge of a precursor of foamed polymeric material and a blowing agent, heating a first portion of the charge defining at least about 2% of the charge to a temperature at least about 10 °C higher than the average temperature of the charge, and injecting the charge into a molding chamber.

Also embraced is a method involving accumulating, in an accumulator fluidly connected to a molding chamber, a charge including a first portion comprising a fluid polymeric material essentially free of blowing agent and a second portion comprising a fluid polymeric material mixed with a blowing agent, and injecting the charge from the accumulator into a molding chamber.

Also embraced is a method involving injecting a fluid, single-phase solution of a precursor of foamed polymeric material and a blowing agent into a molding chamber from an accumulator in fluid communication with extrusion apparatus while nucleating the solution to create a nucleated mixture, and allowing the mixture to solidify as a polymeric microcellular article in the molding chamber.

The invention embraces a method involving injecting a blowing agent into an extruder barrel of polymer extrusion apparatus while an extrusion screw is moving axially within the barrel.

The invention also embraces a method involving injecting a blowing agent from an extrusion screw into a barrel of polymer extrusion apparatus.

The invention can be embodied in a method involving establishing in a barrel of extrusion apparatus a fluid polymeric article precursor, withdrawing a portion of the fluid precursor from the barrel, mixing the portion of the fluid precursor with blowing agent to form a mixture of the blowing agent and the portion of the fluid precursor, and introducing the mixture into the barrel.

The invention can be embodied in a method involving introducing polymeric material admixed with a supercritical fluid additive into a mold including a portion having an interior dimension of less than about 3.2 mm (0.125 inch), and allowing the polymeric material to solidify in the mold, the introducing and allowing steps taking place within a period of time less than 10 seconds.

The invention can be embodied in a method involving introducing polymeric material admixed with supercritical fluid into a mold including a portion having an interior dimension of less than about 3.2 mm (0.125 inch) and allowing the polymeric material to solidify in the mold.

The invention can be embodied in a method involving establishing a single-phase, non-nucleated solution of a polymeric material and blowing agent, introducing the solution into a molding chamber while nucleating the solution, cracking the mold thereby allowing cell growth to occur, and recovering a microcellular polymeric article having a shape similar to that of the molding chamber but being larger than the molding chamber.

The invention can be embodied in a method involving forming in an extruder a non-nucleated, homogeneous, fluid, single-phase solution of a precursor of microcellular polymeric material a blowing agent, filling a molding chamber with the solution while nucleating the solution to form within the molding chamber a nucleated microcellular polymeric material precursor.

Also embraced is a method involving injecting a polymeric/blowing agent mixture into a molding chamber at a melt temperature of less than about 205°C (400°F), and molding in the chamber a solid foam polymeric article having a void volume of at least about 5% and a length-to-thickness ratio of at least about 50:1.

The invention also embraces a system including an accumulator having an inlet for receiving a precursor of foamed polymeric material and a blowing agent, and an outlet, a molding chamber having an inlet in fluid communication with the outlet of the accumulator, and heating apparatus associated with the accumulator constructed and arranged to heat, during operation of the system, a first section of the accumulator proximate the molding chamber to a temperature at least about 10 °C higher than the average temperature of the accumulator.

Also embraced is a system including an extruder having an inlet for receiving a precursor of foamed polymeric material and being constructed and arranged to produce fluid polymeric material from the precursor, a first outlet positioned to deliver fluid polymeric material from the extruder, a blowing agent inlet downstream of the first outlet connectable to a source of a physical blowing agent, a mixing region downstream of the blowing agent inlet constructed and arranged to produce a mixture of fluid polymeric precursor and blowing agent, and a second outlet downstream of the mixing region positioned to deliver the mixture of fluid polymeric precursor and blowing agent, and an accumulator having a first inlet fluidly connected to the first outlet of the extruder and a second inlet fluidly connected to the second outlet of the extruder.

Also embraced is a system for producing injection-molded microcellular material, including an extruder having an outlet at an outlet end thereof designed to release a non-nucleated, homogeneous, fluid, single-phase solution of a polymeric material and a blowing agent, and a molding chamber having an inlet in fluid communication with the outlet of the extruder. The system is constructed and arranged to deliver from the extruder outlet to the molding chamber inlet the single-phase solution and, during filling of the molding chamber, to nucleate the single-phase solution to form within the chamber a nucleated microcellular polymeric material precursor.

Also embraced is an extrusion system including a barrel having an inlet designed to receive a precursor of extruded material, an outlet designed to release a fluid mixture of non-nucleated blowing agent and the precursor, an orifice connectable to a source of blowing agent, and a screw mounted for reciprocation within the barrel.

Also embraced is a system for producing injection-molded microcellular material including an extruder having an outlet at an outlet end thereof designed to release a precursor of microcellular polymeric material and a blowing agent, and a molding chamber having an inlet in fluid communication with the outlet of the extruder. The system is constructed and arranged to cyclically inject the precursor of microcellular polymeric material and the blowing agent into the molding chamber.

Also embraced is an extrusion system including a barrel having an inlet designed to receive a precursor of extruded material, and outlet designed to release a fluid mixture of non-nucleated blowing agent and precursor, and an orifice connected to a source of blowing agent. A screw is mounted for reciprocation within the barrel.

The method may involve injecting a blowing agent into an extruder barrel of polymer extrusion apparatus while an extrusion screw is moving axially within the barrel. In one embodiment, the method involves injecting a blowing agent from an extrusion screw into a barrel of polymer extrusion apparatus. This injection technique can be used with any of a wide variety of microcellular and conventional techniques. The invention may involve an extrusion screw constructed and arranged for rotation within a barrel of polymer extrusion apparatus that includes, within the screw. a lumen communicating with an orifice in a surface of the screw. The lumen can be used to inject blowing agent into the extrusion barrel.

The invention provides a system for producing injection-molded articles. The system may include an extruder, a molding chamber, a runner fluidly connecting the extruder and the molding chamber, and a temperature control device in thermal communication with the runner. The invention may involve establishing a fluid mixture blowing agent and injection-molded material precursor in an extruder, passing the mixture through a runner into a molding chamber, solidifying the portion of the fluid mixture in the chamber while maintaining a portion of the mixture in the runner in a fluid state, and injecting additional fluid mixture into the runner thereby urging the portion of the fluid mixture and the runner into the chamber.

The invention also embraces a method that involves withdrawing a portion of a fluid polymeric article precursor from an extrusion barrel, mixing the portion of the fluid precursor with blowing agent to form a mixture, and re-introducing the mixture into the barrel.

The invention also embraces a system including an extruder with an extruder barrel, a molding chamber, and a mixing chamber in fluid communication with a first, upstream orifice in the barrel, a second, downstream orifice in the barrel, and a source of a blowing agent.

The invention can provide a molded foam article having a shape essentially identical to that of a molding chamber, including at least one portion having a cross-sectional dimension of no more than about 3.2 mm (0.125 inch).

The invention can provide an injection molded polymeric part having a length-to-thickness ratio of at least about 50:1, the polymer having a melt index of less than about 10.

The invention can provide an injection molded polymeric part having a length-to-thickness ratio of at least about 120:1, the polymer having a melt flow rate of less than about 40.

The invention can provide an injection molded polymeric foam having a void volume of at least about 5%, and having a surface that is free of splay and swirl visible to the naked human eye.

The invention can provide an article having a thickness of less than about 3.2 mm (0.125 inch) at a void volume of at least about 20%.

Other advantages, novel features, and objects of the invention will become apparent from the following detailed description of the invention when considered in conjunction with the accompanying drawings, which are schematic and which are not intended to be drawn to scale. In the figures, each identical or nearly identical component that is illustrated in various figures is represented by a single numeral. For purposes of clarity, not every component is labeled in every figure, nor is every component of each embodiment of the invention shown where illustration is not necessary to allow those of ordinary skill in the art to understand the invention.

### Brief Description of the Drawings

In the drawings:
Fig. 1 illustrates a microcellular injection or intrusion molding system of the present invention, including an extrusion system having a nucleating pathway defining an orifice of a molding chamber;
Fig. 2 illustrates a microcellular injection molding system of the invention including an accumulator;
Fig. 3 illustrates one embodiment of a molding chamber of molding systems of the invention, including a movable wall;
Fig. 4 illustrates another embodiment of a molding chamber, where the molding chamber is a gas-pressurized mold;
Fig. 5 illustrates one stage of operation of a system for accumulation and injection molding of microcellular material to form an article having a solid wall and a microcellular interior (blowing agent-rich and blowing agent-poor regions), in which an accumulator is filled prior to injection;
Fig. 6 illustrates the system of Fig. 5 at a stage of operation immediately after injection;
Fig. 7 illustrates the system of Fig. 5 at a stage of operation after one injection cycle, during filling of the accumulator;
Fig. 8 illustrates a microcellular injection molding system for forming blowing agent-rich and blowing agent-poor regions of molten polymer, including a melt pump, a gas injection port, and a mixer;
Fig. 9 illustrates a helical screw for use in an injection molding system or other extrusion system, including a lumen that passes through a screw flight and is in fluid communication with a source of foaming agent for distributing a foaming agent in a barrel of an extruder;
Fig. 10 is a photocopy of a photomicrograph of an injected molded article formed using systems and methods of the present invention ;
Fig. 11 is a photocopy of a photomicrograph of a microcellular injection molded article formed using systems and methods of the present invention;
Fig. 12 is a photocopy of a photomicrograph of another microcellular injection molded article formed using systems and methods of the present invention;
Fig. 13 is a photocopy of a photomicrograph of another microcellular injection molded article formed using systems and methods of the present invention; formed using the system and method by the present invention
Fig. 14 is a photocopy of a photomicrograph of another microcellular injection molded article formed using systems and methods of the present invention;
Fig. 15 is a photocopy of another microcellular injection molded article formed using systems and methods of the present invention;
Fig. 16 is a photocopy of a photomicrograph of a surface of a comparative solid non-foamed injection molded article;
Fig. 17 is a photocopy of a photomicrograph of a surface of a microcellular injection molded article formed using systems and methods of the present invention having a smooth surface free of splay and a swirl visible to the naked human eye; and
Fig. 18 is a photocopy of a photomicrograph of a surface of an injection molded foam polymeric article that includes swirls visible to the naked human eye.

### Detailed Description of the Invention

Altention is directed to commonly-owned, co-pending U.S. patent application serial no. 08/777,709, entitled "Method and Apparatus for Microcellular Polymer Extrusion", filed December 20, 1996, and commonly-owned, co-pending International patent application serial no. PCT/US/97/15088, filed August 26, 1997 .

The various embodiments and aspects of the invention will be better understood from the following definitions. As used herein, "nucleation" defines a process by which a homogeneous, single-phase solution of polymeric material, in which is dissolved molecules of a species that is a gas under ambient conditions, undergoes formations of clusters of molecules of the species that define "nucleation sites", from which cells will grow. That is, "nucleation" means a change from a homogeneous, single-phase solution to a mixture in which sites of aggregation of at least several molecules of blowing agent are formed. Nucleation defines that transitory state when gas, in solution in a polymer melt, comes out of solution to form a suspension of bubbles within the polymer melt. Generally this transition state is forced to occur by changing the solubility of the polymer melt from a state of sufficient solubility to contain a certain quantity of gas in solution to a state of insufficient solubility to contain that same quantity of gas in solution. Nucleation can be effected by subjecting the homogeneous, single-phase solution to rapid thermodynamic instability, such as rapid temperature change, rapid pressure drop, or both. Rapid pressure drop can be created using a nucleating pathway, defined below. Rapid temperature change can be created using a heated portion of an extruder, a hot glycerine bath, or the like. A "nucleating agent" is a dispersed agent, such as talc or other filler particles, added to a polymer and able to promote formation of nucleation sites from a single-phase, homogeneous solution. Thus "nucleation sites" do not define locations, within a polymer, at which nucleating agent particles reside. "Nucleated" refers to a state of a fluid polymeric material that had contained a single-phase, homogeneous solution including a dissolved species that is a gas under ambient conditions, following an event (typically thermodynamic instability) leading to the formation of nucleation sites. "Non-nucleated" refers to a state defined by a homogeneous, single-phase solution of polymeric material and dissolved species that is a gas under ambient conditions, absent nucleation sites. A "non-nucleated" material can include nucleating agent such as talc. A "polymeric material/blowing agent mixture" can be a single-phase, non-nucleated solution of at least the two, a nucleated solution of at least the two, or a mixture in which blowing agent cells have grown. "Essentially closed-cell" microcellular material is meant to define material that, at a thickness of about 100 microns, contains no connected cell pathway through the material. "Nucleating pathway" is meant to define a pathway that forms part of microcellular polymeric foam extrusion apparatus and in which, under conditions in which the apparatus is designed to operate (typically at pressures of from about 10.34 to about 207 mPa (about 1500 to about 30,000 psi) upstream of the nucleator and at flow rates of greater than about 4.5 kg (10 pounds) polymeric material per hour), the pressure of a single-phase solution of polymeric material admixed with blowing agent in the system drops below the saturation pressure for the particular blowing agent concentration at a rate or rates facilitating rapid nucleation. A nucleating pathway defines, optionally with other nucleating pathways, a nucleation or nucleating region of a device of the invention. "Reinforcing agent", as used herein, refers to auxiliary, essentially solid material constructed and arranged to add dimensional stability, or strength or toughness, to material. Such agents are typified by fibrous material as described in U.S. Patent Nos. 4,643,940 and 4,426,470. "Reinforcing agent" does not, by definition, necessarily include filler or other additives that are not constructed and arranged to add dimensional stability. Those of ordinary skill in the art can test an additive to determine whether it is a reinforcing agent in connection with a particular material.

For purposes of the present invention, microcellular material is defined as foamed material containing cells of size less than about 100 microns in diameter, or material of cell density of generally greater than at least about 10⁶ cells per cubic centimeter, or preferably both. The void fraction of microcellular material generally varies from 5% to 98%. Supermicrocellular material is defined for purposes of the invention by cell sizes smaller than 1 um and cell densities greater than 10¹² cells per cubic centimeter.

The invention allows the production of microcellular material having average cell size of less than about 50 microns. In some embodiments particularly small cell size is desired. and in these embodiments material has average cell size of less than about 20 microns, more preferably less than about 10 microns, and more preferably still less than about 5 microns. The microcellular material preferably has a maximum cell size of about 100 microns. In embodiments where particularly small cell size is desired, the material can have maximum cell size of about 50 microns, more preferably about 25 microns, more preferably about 15 microns, more preferably about 8 microns, and more preferably still about 5 microns. A set of embodiments includes all combinations of these noted average cell sizes and maximum cell sizes. For example, one embodiment in this set of embodiments includes microcellular material having an average cell size of less than about 30 microns with a maximum cell size of about 50 microns, and as another example an average cell size of less than about 30 microns with a maximum cell size of about 35 microns, etc. That is, microcellular material designed for a variety of purposes can be produced having a particular combination of average cell size and a maximum cell size preferable for that purpose. Control of cell size is described in greater detail below.

In one embodiment, essentially closed-cell microcellular material is produced in accordance with the techniques of the present invention. As used herein, "essentially closed-cell" is meant to define material that, at a thickness of about 100 microns, contains no connected cell pathway through the material.

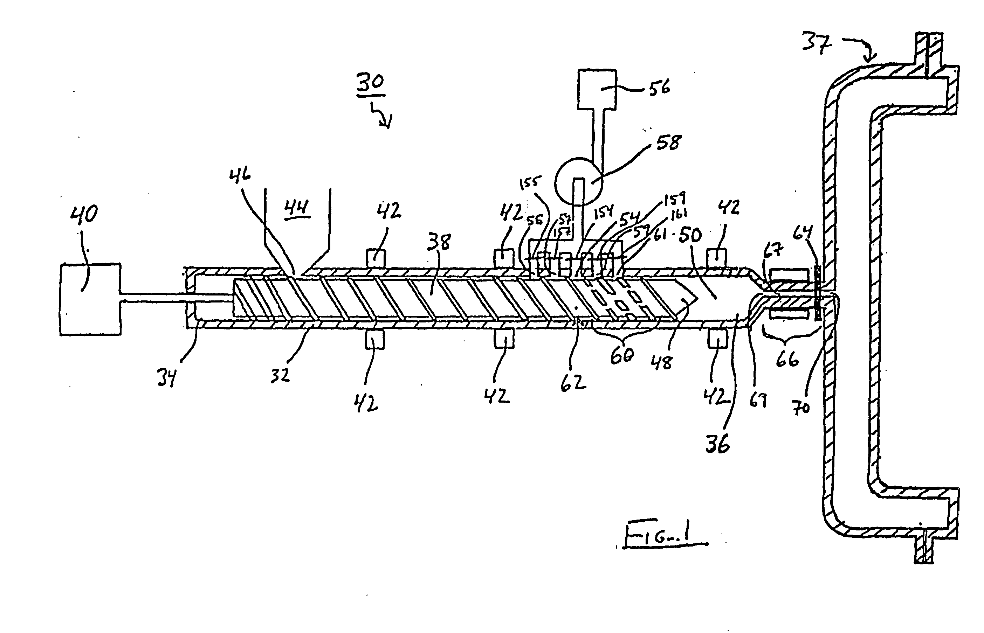

Referring now to Fig. 1, a molding system 30 is illustrated schematically that can be used to carry out molding according to a variety of embodiments of the invention. System 30 of Fig. 1 includes a barrel 32 having a first, upstream end 34, and a second, downstream end 36 connected to a molding chamber 37. Mounted for rotation within barrel 32 is a screw 38 operably connected, at its upstream end, to a drive motor 40. Although not shown in detail, screw 38 includes feed, transition, gas injection, mixing, and metering sections.

Positioned along barrel 32, optionally, are temperature control units 42. Control units 42 can be electrical heaters, can include passageways for temperature control fluid, and or the like. Units 42 can be used to heat a stream of pelletized or fluid polymeric material within the barrel to facilitate melting, and/or to cool the stream to control viscosity and, in some cases, blowing agent solubility. The temperature control units can operate differently at different locations along the barrel, that is, to heat at one or more locations, and to cool at one or more different locations. Any number of temperature control units can be provided.

Barrel 32 is constructed and arranged to receive a precursor of polymeric material. As used herein, "precursor of polymeric material" is meant to include all materials that are fluid, or can form a fluid and that subsequently can harden to form a microcellular polymeric article. Typically, the precursor is defined by thermoplastic polymer pellets, but can include other species. For example, in one embodiment the precursor can be defined by species that will react to form microcellular polymeric material as described, under a variety of conditions. The invention is meant to embrace production of microcellular material from any combination of species that together can react to form a polymer, typically monomers or low-molecular-weight polymeric precursors which are mixed and foamed as the reaction takes place. In general, species embraced by the invention include thermosetting polymers in which a significant increase in molecular weight of the polymer occurs during reaction, and during foaming, due to crosslinking of polymeric components. For example, polyamides of the condensation and addition type, including aliphatic and aromatic polyamides such as polyhexamethyleneadipamide, poly(e-caprolactam), polyenes such as cycloaromatic polymers including polydicyclopentadiene, acrylic polymers such as polyacrylamide, polyacrylamate, acrylic ester polymers such as 2-cyanoacrylic ester polymers, acrylonitrile polymers, and combinations.

Preferably, a thermoplastic polymer or combination of thermoplastic polymers is selected from among amorphous, semicrystalline, and crystalline material including polyaromatics such as styrenic polymers including polystyrene, polyolefins such as polyethylene and polypropylene, fluoropolymers, crosslinkable polyolefins, polyamides, polyaromatics such as polystyrene and polyvinyl chloride. Thermoplastic elastomers can be used as well, especially metallocene-catalyzed polyethylene.

Typically, introduction of the pre-polymeric precursor utilizes a standard hopper 44 for containing pelletized polymeric material to be fed into the extruder barrel through orifice 46, . although a precursor can be a fluid prepolymeric material injected through an orifice and polymerized within the barrel via, for example, auxiliary polymerization agents. In connection with the present invention, it is important only that a fluid stream of polymeric material be established in the system.

Immediately downstream of downstream end 48 of screw 38 in Fig. 1 is a region 50 which can be a temperature adjustment and control region, auxiliary mixing region, auxiliary pumping region, or the like. For example, region 50 can include temperature control units to adjust the temperature of a fluid polymeric stream prior to nucleation, as described below. Region 50 can include instead, or in addition, additional, standard mixing units (not shown), or a flow-control unit such as a gear pump (not shown). In another embodiment, region 50 can be replaced by a second screw in tandem which can include a cooling region. In an embodiment in which screw 38 is a reciprocating screw in an injection molding system, described more fully below, region 50 can define an accumulation region in which a single-phase, non-nucleated solution of polymeric material and a blowing agent is accumulated prior to injection into mold 37.

Microcellular material production according to the present invention preferably uses a physical blowing agent, that is. an agent that is a gas under ambient conditions (described more fully below). However, chemical blowing agents can be used and can be formulated with polymeric pellets introduced into hopper 44. Suitable chemical blowing agents include those typically relatively low molecular weight organic compounds that decompose at a critical temperature or another condition achievable in extrusion and release a gas or gases such as nitrogen, carbon dioxide, or carbon monoxide. Examples include azo compounds such as azo dicarbonamide.

As mentioned, in preferred embodiments a physical blowing agent is used. One advantage of embodiments in which a physical blowing agent, rather than a chemical blowing agent, is used is that recyclability of product is maximized. Use of a chemical blowing agent typically reduces the attractiveness of a polymer to recycling since residual chemical blowing agent and blowing agent by-products contribute to an overall non-uniform recyclable material pool. Since foams blown with chemical blowing agents inherently include a residual, unreacted chemical blowing agent after a final foam product has been produced, as well as chemical by-products of the reaction that forms a blowing agent, material of the present invention in this set of embodiments includes residual chemical blowing agent, or reaction by-product of chemical blowing agent, in an amount less than that inherently found in articles blown with 0.1% by weight chemical blowing agent or more, preferably in an amount less than that inherently found in articles blown with 0.05% by weight chemical blowing agent or more. In particularly preferred embodiments, the material is characterized by being essentially free of residual chemical blowing agent or free of reaction by-products of chemical blowing agent. That is, they include less residual chemical blowing agent or by-product that is inherently found in articles blown with any chemical blowing agent. In this embodiment, along barrel 32 of system 30 is at least one port 54 in fluid communication with a source 56 of a physical blowing agent. Any of a wide variety of physical blowing agents known to those of ordinary skill in the art such as hydrocarbons, chlorofluorocarbons, nitrogen, carbon dioxide, and the like can be used in connection with the invention, or mixtures thereof, and, according to a preferred embodiment, source 56 provides carbon dioxide as a blowing agent. Supercritical fluid blowing agents are especially preferred, in particular supercritical carbon dioxide. In one embodiment solely supercritical carbon dioxide is used as blowing agent. Supercritical carbon dioxide can be introduced into the extruder and made to form rapidly a single-phase solution with the polymeric material either by injecting carbon dioxide as a supercritical fluid, or injecting carbon dioxide as a gas or liquid and allowing conditions within the extruder to render the carbon dioxide supercritieal. Injection of carbon dioxide into the extruder in a supercritical state is preferred. The single-phase solution of supercritical carbon dioxide and polymeric material formed in this manner has a very low viscosity which advantageously allows lower temperature molding, as well as rapid filling of molds having close tolerances to form very thin molded parts, which is discussed in greater detail below.

A pressure and metering device 58 typically is provided between blowing agent source 56 and that at least one port 54. Device 58 can be used to meter the blowing agent so as to control the amount of the blowing agent in the polymeric stream within the extruder to maintain blowing agent at a level, according to one set of embodiments, between about 1% and 25% by weight, preferably between about 6% and 20% by weight, more preferably between about 8% and 15% by weight, more preferably still between about 10% and 12% by weight, based on the weight of the polymeric stream and blowing agent. The particular blowing agent used (carbon dioxide, nitrogen, etc.) and the amount of blowing agent used is often dependent upon the polymer, the density reduction, cell size and physical properties desired.

The pressure and metering device can be connected to a controller (not shown) that also is connected to drive motor 40 to control metering of blowing agent in relationship to flow of polymeric material to very precisely control the weight percent blowing agent in the fluid polymeric mixture.

Although port 54 can be located at any of a variety of locations along the barrel, according to a preferred embodiment it is located just upstream from a mixing section 60 of the screw and at a location 62 of the screw where the screw includes unbroken flights.

A supercritical fluid blowing agent also provides an advantage in that it facilitates the rapid, intimate mixing of dissimilar polymeric materials, thereby providing a method for mixing and molding dissimilar polymeric materials without post-mold delamination. Dissimilar materials include, for example, polystyrene and polypropylene, or polystyrene and polyethylene. These dissimilar materials typically have significantly different viscosity, polarity, or chemical functionality that, in most systems, precludes formation of a well-mixed, homogeneous combination, leading to delamination or other physical property reduction or physical property degradation. Preferably, in this embodiment, at least two dissimilar components are present each in an amount of at least about 1 % by weight, preferably at least about 5%, more preferably at least about 10%, more preferably still at least about 20%.

Typical prior art techniques for forming combinations of dissimilar polymeric materials involves extruding and pelletizing dissimilar polymeric materials which then are provided, as pellets, in hopper 44 of a system such as that of Fig. 1. Using a supercritical fluid blowing agent, in accordance with this aspect of the invention, eliminates the necessity for using pre-mixed pellets or compounding equipment. In this aspect, a mixture of different polymer pellets, for example a mixture of polystyrene pellets and polypropylene pellets, can be provided in hopper 44, melted, intimately mixed with a supercritical fluid blowing agent, and extruded as a well-mixed homogeneous mixture. In this aspect of the invention a single-phase solution of blowing agent and multi-component polymeric material, including dissimilar materials, can be formed at flow rates and within time periods specified below. This aspect of the invention can be used to form polymeric articles composed of at least two dissimilar polymeric materials that resist delamination via extrusion, molding as described herein, or other techniques.

The described arrangement facilitates a method that is practiced according to several embodiments of the invention, in combination with injection or intrusion molding. The method involves introducing, into fluid polymeric material flowing at a rate of from 180g to about 640 g (about 0.4 to about 1.4 lbs/hr), a blowing agent that is a gas under ambient conditions and, in a period of less than about 1 minute, creating a single-phase solution of the blowing agent fluid in the polymer. The blowing agent fluid is present in the solution in an amount of at least about 2.5% by weight based on the weight of the solution in this arrangement. In some embodiments, the rate of flow of the fluid polymeric material is from about 2.725 to 5.450 kg/hr (about 6 to 12 lbs/hr). In these arrangements, the blowing agent fluid is added and a single-phase solution formed within one minute with blowing agent present in the solution in an amount of at least about 3% by weight, more preferably at least about 5% by weight, more preferably at least about 7%, and more preferably still at least about 10% (although, as mentioned, in a another set of preferred embodiments lower levels of blowing agent are used). In these arrangements, at least about 1.1 kg (2.4 lbs) per hour blowing agent, preferably CO₂, is introduced into the fluid stream and admixed therein to form a single-phase solution. The rate of introduction of blowing agent is matched with the rate of flow of polymer to achieve the optimum blowing agent concentration.

Downstream of region 50 is a nucleator 66 constructed to include a pressure-drop nucleating pathway 67. As used herein, "nucleating pathway" in the context of rapid pressure drop is meant to define a pathway that forms part of microcellular polymer foam extrusion apparatus and in which, under conditions in which the apparatus is designed to operate (typically at pressures of from about 10.34 to about 207 mPa (about 1500 to about 30,000 psi) upstream of the nucleator and at flow rates of greater than about 2.3 kg (5 lbs) polymeric material per hour), the pressure of a single-phase solution of polymeric material admixed with blowing agent in the system drops below the saturation pressure for the particular blowing agent concentration at a rate or rates facilitating nucleation. Nucleating pathway 67 includes an inlet end 69 for receiving a single-phase solution of polymeric material precursor and blowing agent as a fluid polymeric stream, and a nucleated polymer releasing end 70 for delivering nucleated polymeric material to molding chamber, or mold, 37. Nucleator 66 is located in direct fluid communication with mold 37, such that the nucleator defines a nozzle connecting the extruder to the molding chamber and the nucleated polymer releasing end 70 defines an orifice of molding chamber 37. According to one set of embodiments, the invention lies in placing a nucleator upstream of a mold. Although not illustrated, another embodiment of nucleator 66 includes a nucleating pathway 67 constructed and arranged to have a variable cross-sectional dimension, that is, a pathway that can be adjusted in cross-section. A variable cross-section nucleating pathway allows the pressure drop rate in a stream of fluid polymeric material passing therethrough to be varied in order to achieve a desired nucleation density.

In one embodiment, a nucleating pathway that changes in cross-sectional dimension along its length is used. In particular, a nucleating pathway that decreases in cross-sectional dimension in a downstream direction can significantly increase pressure drop rate thereby allowing formation of microcellular material of very high cell density using relatively low levels of blowing agent. These and other exemplary and preferred nucleators are described in co-pending U.S. patent application serial no. 08/777,709 entitled "Method and Apparatus for Microcellular Extrusion" and International patent application serial no. PCT/US97/15088, entitled "Method and Apparatus for Microcellular Polymer Extrusion" of Anderson, et al., both referenced above.

While pathway 67 defines a nucleating pathway, some nucleation also may take place in the mold itself as pressure on the polymeric material drops at a very high rate during filling of the mold.

The system of Fig. 1 illustrates one general embodiment of the present invention in which a single-phase, non-nucleated solution of polymeric material and blowing agent is nucleated, via rapid pressure drop, while being urged into molding chamber 37 via the rotation action of screw 38. This embodiment illustrates an intrusion molding technique and, in this embodiment, only one blowing agent injection port 54 need be utilized.

In another embodiment, screw 38 of system 30 is a reciprocating screw and a system defines an injection molding system. In this embodiment screw 38 is mounted for reciprocation within barrel 32, and includes a plurality of blowing agent inlets or injection ports 54, 55, 57, 59, and 61 arranged axially along barrel 32 and each connecting barrel 32 fluidly to pressure and metering device 58 and a blowing agent source 56. Each of injection ports 54, 55, 57, 59, and 61 can include a mechanical shut-off valve 154, 155, 157, 159, and 161 respectively, which allow the flow of blowing agent into extruder barrel 38 to be controlled as a function of axial position of reciprocating screw 38 within the barrel. In operation, according to this embodiment, a charge of fluid polymeric material and blowing agent (which can be a single-phase, non-nucleated charge in some embodiments) is accumulated in region 50 downstream of the downstream end 48 of screw 38. Screw 38 is forced distally (downstream) in barrel 32 causing the charge in region 50 to be injected into mold 37. A mechanical shut-off valve 64, located near orifice 70 of mold 37, then can be closed and mold 37 can be opened to release an injection-molded part. Screw 38 then rotates while retracting proximally (toward the upstream end 34 of the barrel), and shut-off valve 161 is opened while shut-off valves 155, 157, 154, and 159 all are closed, allowing blowing agent to be injected into the barrel through distal-most port 61 only. As the barrel retracts while rotating, shut-off valve 161 is closed while shut-off valve 159 is opened, then valve 159 is closed while valve 154 is opened, etc. That is, the shut-off valves which control injection of blowing agent from source 56 into barrel 32 are controlled so that the location of injection of blowing agent moves proximally (in an upstream direction) along the barrel as screw 38 retracts proximally. The result is injection of blowing agent at a position along screw 38 that remains essentially constant. Thus, blowing agent is added to fluid polymeric material and mixed with the polymeric material to a degree and for a period of time that is consistent independent of the position of screw 38 within the barrel. Toward this end, more than one of shut-off valves 155, 157, etc. can be open or at least partially open simultaneously to achieve smooth transition between injection ports that are open and to maintain essentially constant location of injection of blowing agent along barrel 38.

Once barrel 38 is fully retracted (with blowing agent having been most recently introduced through injection port 55 only), all of the blowing agent shut-off valves are closed. At this point, within distal region 50 of the barrel is an essentially uniform fluid polymeric material/blowing agent mixture. Shut-off valve 64 then is opened and screw 38 is urged distally to inject the charge of polymeric material and blowing agent into mold 37.

The embodiment of the invention involving a reciprocating screw can be used to produce conventional or microcellular foam. Where conventional foam is to be produced, the charge that is accumulated in distal region 50 can be a multi-phase mixture including cells of blowing agent in polymeric material, at a relatively low pressure. Injection of such a mixture into mold 37 results in cell growth and production of conventional foam. Where microcellular material is to be produced, a single-phase, non-nucleated solution is accumulated in region 50 and is injected into mold 37 while nucleation takes place.

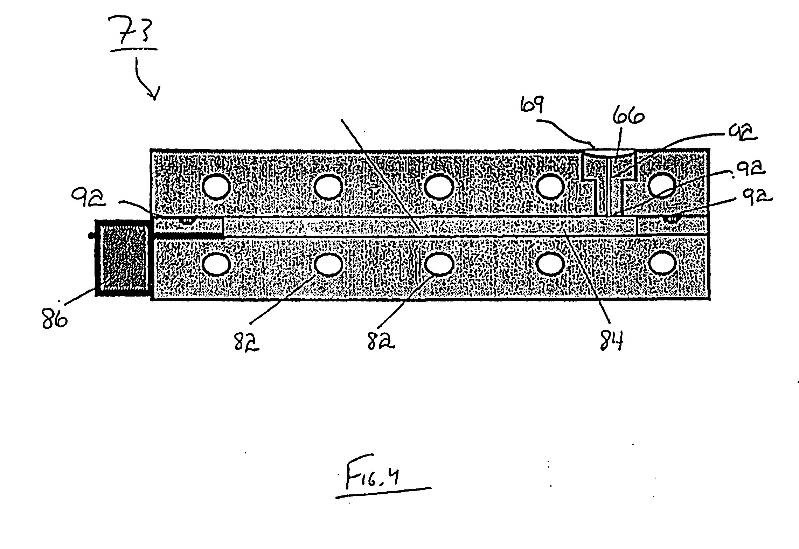

The described arrangement facilitates a method of the invention that is practiced according to another set of embodiments in which varying concentrations of blowing agent in fluid polymeric material is created at different locations in a charge accumulated in distal portion 50 of the barrel. This can be achieved by control of shut-off valves 155,157, 154, 159, and 161 in order to achieve non-uniform blowing agent concentration. In this technique, articles having varying densities may be produced, such as, for example, an article having a solid exterior and a foamed interior. One technique for forming articles having portions that vary in density is described more fully below with reference to Figs. 5-7.

Although not shown, molding chamber 37 can include vents to allow air within the mold to escape during injection. The vents can be sized to provide sufficient back pressure during injection to control cell growth so that uniform microcellular foaming occurs. In another embodiment, a single-phase, non-nucleated solution of polymeric material and blowing agent is nucleated while being introduced into an open mold, then the mold is closed to shape a microcellular article.

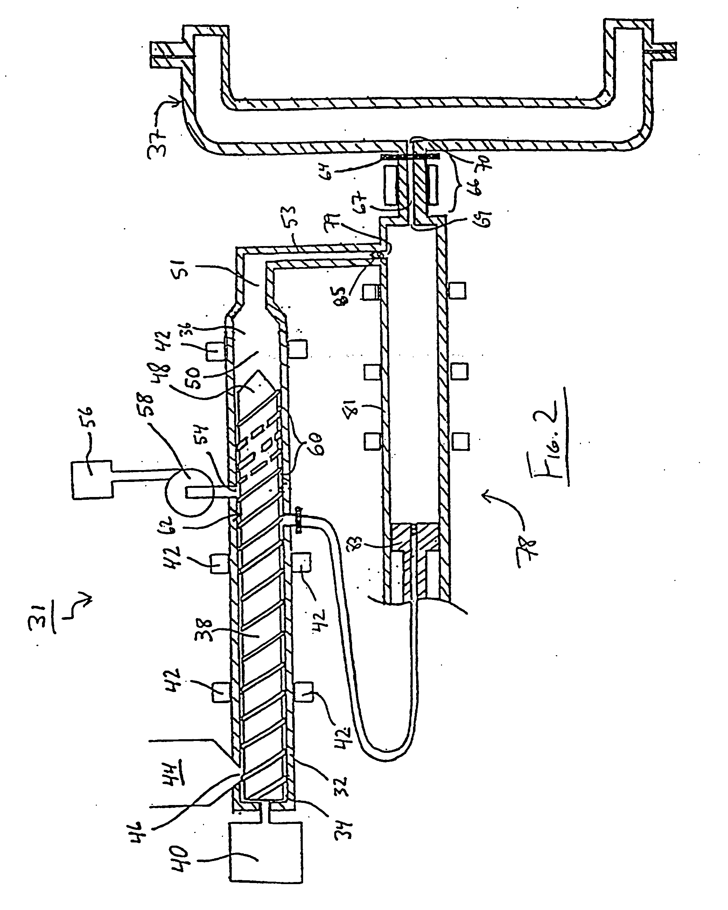

According to another embodiment an injection molding system utilizing a separate accumulator is provided. Referring now to Fig. 2, an injection molding system 31 includes an extruder similar to that illustrated in Fig. 1. The extruder can include a reciprocating screw as in the system of Fig. 1. At least one accumulator 78 is provided for accumulating molten polymeric material prior to injection into molding chamber 37. The extruder includes an outlet 51 fluidly connected to an inlet 79 of the accumulator via a conduit 53 for delivering a non-nucleated, single-phase solution of polymeric material and blowing agent to the accumulator.

Accumulator 78 includes, within a housing 81, a plunger 83 constructed and arranged to move axially (proximally and distally) within the accumulator housing. The plunger can retract proximally and allow the accumulator to be filled with polymeric material/blowing agent through inlet 79 and then can be urged distally to force the polymeric material/blowing agent mixture into mold 37. When in a retracted position, a charge defined by single-phase solution of molten polymeric material and blowing agent is allowed to accumulate in accumulator 78. When accumulator 78 is full, a system such as, for example, a hydraulically controlled retractable injection cylinder (not shown) forces the accumulated charge through nucleator 66 and the resulting nucleated mixture into molding chamber 37. This arrangement illustrates another embodiment in which a non-nucleated, single-phase solution of polymeric material and blowing agent is nucleated as a result of the process of filling the molding chamber

In another arrangement, a reciprocating screw extruder such as that illustrated in Fig. 1 can be used with system 31 of Fig. 2 so as to successively inject charges of polymeric material and blowing agent while pressure on plunger 83 remains constant so that nucleation is prevented within the accumulator. When a plurality of charges have been introduced into the accumulator, shut-off valve 64 can be opened and plunger 83 driven distally to transfer the charge within the accumulator into mold 37. This can be advantageous for production of very large parts.

A ball check valve 85 is located near the inlet 79 of the accumulator to regulate the flow of material into the accumulator and to prevent backflow into the extruder, and to maintain a system pressure required to maintain the single-phase solution of non-nucleated blowing agent and molten polymeric material. Optionally, injection molding system 31 can include more than one accumulator in fluid communication with extruder 30 and molding chamber 37 in order to increase rates of production.

### System 31 includes several additional components that will be described more fully below.

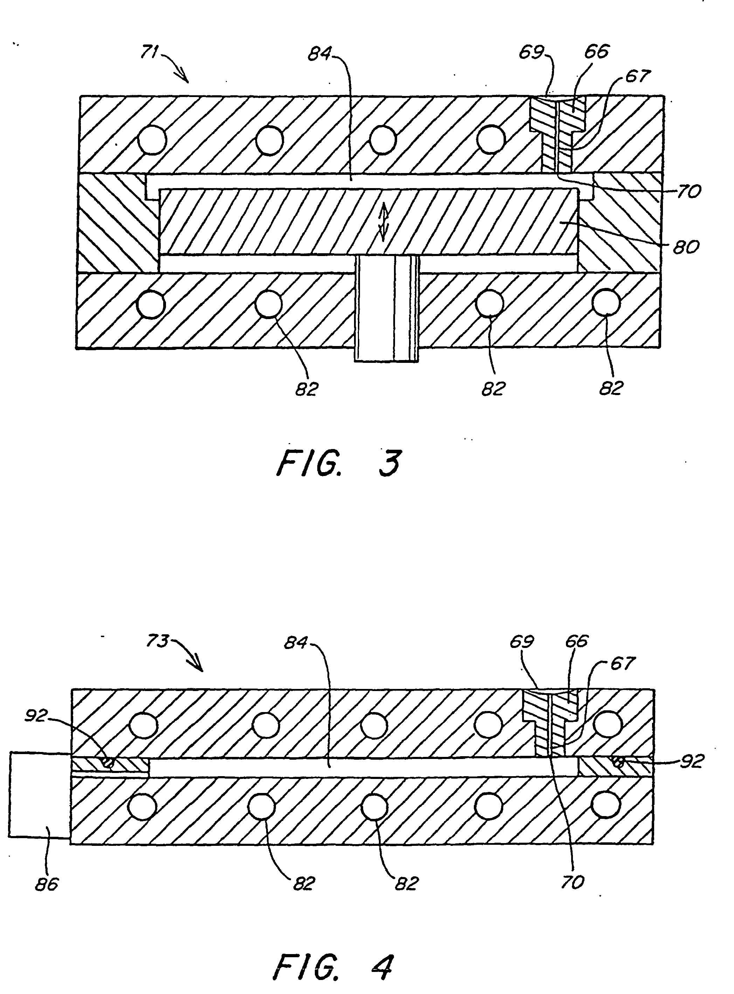

Figs. 3 and 4 illustrate molding chambers according to alternative embodiments for use with injection molding systems of the invention. In Fig. 3, a movable wall molding chamber 71 is illustrated schematically, including mold cavity 84, temperature control elements 82, moveable wall 80, pressurizing means (not shown) and in the preferred embodiment illustrated, at least one nucleator 66 including a nucleating pathway 67 having an inlet end 69 and an releasing end 70 which defines an orifice of mold cavity 84. In one embodiment, movable wall molding chamber 71 includes a plurality of nucleators 66. Movable wall 80 can be adjusted to increase the volume of the mold as the mold is filled with a nucleated mixture of polymeric precursor and blowing agent, thus maintaining a constant pressure within the mold. In this way, cell growth can be restricted, or controlled, appropriately.

In Fig. 4, a gas counter-pressure molding chamber 73 is illustrated schematically, including mold cavity 84, temperature control elements 82, pressure controller 86, seals 92, and in the preferred embodiment illustrated, at least one nucleator 66 including a nucleating pathway 67 including defining an orifice of the molding chamber 73. As described previously, the nucleating pathway 67 has an inlet end 69 and an releasing end 70 which defines an orifice of chamber 84. The pressure within the mold can be maintained, via pressure controller 86, to restrict or control cell growth in the nucleated mixture introduced into the mold.

Any combination of a movable-wall mold, a mold having a gas pressure controller, and temperature control elements in a mold can be used for a variety of purposes. As discussed, conditions can be controlled so as to restrict or control cell growth in a nucleated mixture with the mold. Another use for temperature control measurements is that a portion of the mold wall, or the entire mold wall, can be maintained at a relatively high or relatively low temperature, which can cause relatively greater or lesser cell growth at regions near the wall (regions at and near the skin of the microcellular mold and product) relative to regions near the center of the article formed in the mold.

The invention allows the production of relatively thick microcellular polymeric material for example material including at least one portion have a thickness of at least 12.7 mm (0.500 inch) by establishing a nucleated, microcellular polymeric precursor in a mold and rapidly "cracking", or opening the mold to allow a part larger than the interior of the mold itself to form. When the mold is cracked, cell growth occurs due to a corresponding pressure drop. The nucleated mixture is allowed to partially solidify in the shape of the mold, or enclosure, to form a first microcellular polymeric article in the shape of the enclosure, is removed from the enclosure, and allowed to expand further to form a second microcellular polymeric article having a shape that is larger than the shape of the enclosure. In some aspects, the injection or protrusion may continue after cracking of the mold, to control density and cell structure. That is, a solution can be introduced into the mold while being nucleated and, simultaneously, the mold can be cracked and then further opened to control back pressure in the mold and to control the size of the final part and cell density and structure. This can be accomplished, as well, with an analagous moveable wall mold, described herein.

The invention allows for rapid, cyclic, polymeric foam molding. After injection and molding, in a period of less than about 10 minutes, a second nucleated mixture can be created by injection into the molding chamber and allowed to foam and solidify in the shape of the enclosure, and to be removed. Preferably, the cycle time is less than about one minute, more preferably less than about 20 seconds. The time between introduction of the material into the mold and solidification is typically less than about 10 seconds. Low cycle times are provided due to reduced weight in foam material (less mass to cool) and low melt temperatures made possible by reduced viscosity of a supercritical fluid blowing agent. With lower melt temperatures less heat absorption is required by ejection.

Referring now to Figs. 5-7, another embodiment of the invention that makes use of system 31 is illustrated, and system 31 now will be described more fully. System 31 also includes a blowing agent-free conduit 88 connecting an outlet 90 of the extruder with an accumulator inlet 91. Inlet 91 of the accumulator is positioned at the face of plunger 83 of the accumulator. A mechanical shut-off valve 99 is positioned along conduit 88, preferably near outlet 90. Extruder outlet 90 is located in the extruder upstream of blowing agent inlet 54 (or multiple blowing agent inlets, as in the extrusion arrangement illustrated in Fig. 1, where that arrangement is used in the system as described in Figs. 5-7) but far enough downstream in the extruder that it can deliver fluid polymeric material 94. The fluid polymeric material 94 delivered by conduit 88 is blowing-agent-poor material, and can be essentially free of blowing agent. Thus, the system includes a first outlet 90 of the extruder positioned to deliver fluid polymeric material essentially free of blowing agent, or at reduced blowing agent concentration, from the extruder to a first inlet 91 of the accumulator, and a second outlet 51 downstream of the mixing region of the extruder positioned to deliver a mixture of fluid polymeric material and blowing agent (a higher blowing agent concentration than is delivered from outlet 90, i.e. blowing-agent-rich material) to a second inlet 79 of the accumulator. The accumulator can include heating units 96 to control the temperature of polymeric material therein. The accumulator includes an outlet that is the inlet 69 of nucleator 66. A passage (or nozzle) defining nucleating pathway 67 connects accumulator 78 to the molding chamber 37.

A series of valves, including ball check valves 98 and 85 located at the first and second inlets to the accumulator, and mechanical valves 64 and 99, respectively, control flow of material from the extruder to the accumulator and from the accumulator to the mold as desired, as described below according to some embodiments.

The invention involves, in all embodiments, the ability to maintain pressure throughout the system adequate to prevent premature nucleation where nucleation is not desirable (upstream of the nucleator), or cell growth where nucleation has occurred but cell growth is not desired or is desirably controlled.

Practicing the method according to one embodiment of the present invention involves injecting blowing agent-poor material into a mold to form a nearly solid skin, followed by injecting blowing agent-rich material into the mold to form a foamed core. This will be described with reference to Figs. 5-7. Although not illustrated, with proper synchronization this method can also be used to form articles having a foamed exterior and a solid interior.

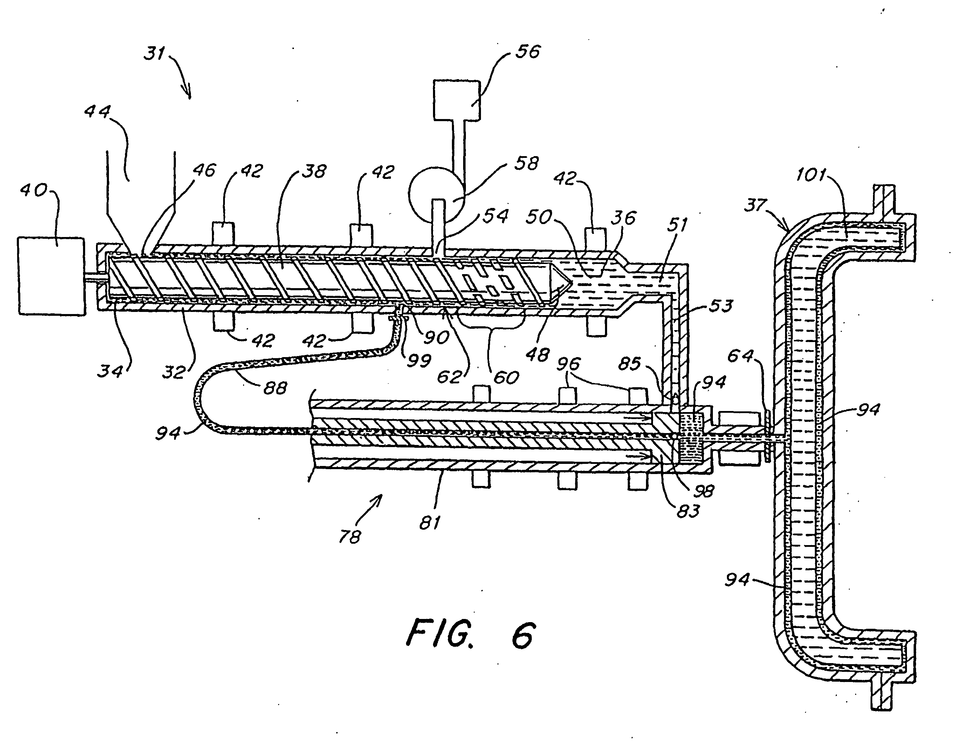

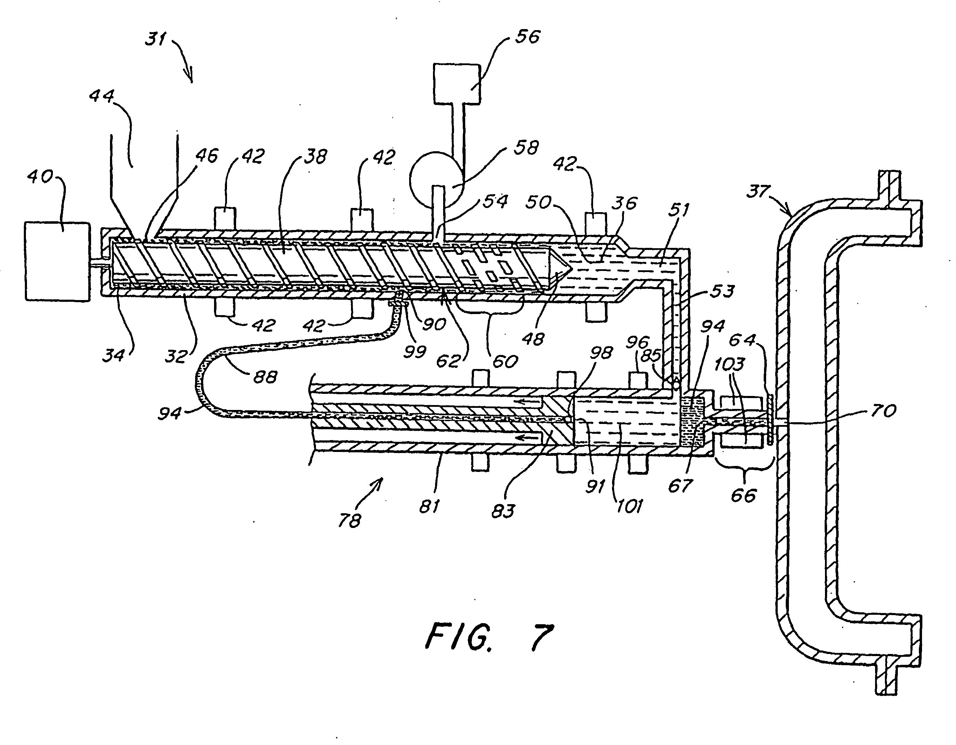

Fig. 5 illustrates a situation in which polymeric material that does not contain blowing agent, or contains blowing agent only to a limited extent (material 94) is provided at the distal end of the accumulator and the proximal end of the accumulator. That is, blowing agent-poor material 94 is provided just in front of plunger 83 and in nucleating pathway 67 and just upstream of nucleating pathway 67. Between these regions of blowing agent-poor material 94 is a region of blowing agent-rich material 101 in the accumulator. At this point, mechanical valve 64 connecting to mold 37 is opened and plunger 83 is driven downstream to force the material in accumulator 78 into mold 37. This is illustrated in Fig. 6. The first section of blowing agent-poor material lines the exterior of the mold, forming an essentially solid exterior wall, then the blowing agent-rich material 101 fills the center of the mold and is nucleated while entering the mold. The distal limit of motion of the plunger stops short of the end of accumulator and the region of blowing agent-poor material that had been located just in front of the plunger is now positioned at the distal end of the accumulator and filling the nucleating pathway of the accumulator. Valve 64 then is closed and the resultant part is removed from mold 37. With mechanical valve 99 closed, the extruder is driven to introduce blowing agent-rich material, preferably as a single-phase, non-nucleated solution of polymeric material and blowing agent, into the accumulator as the plunger retracts proximally, as illustrated in Fig. 7. The plunger applies an essentially constant pressure to material in the accumulator, maintaining material 101 in a non-nucleated state. When the plunger has reached nearly its proximal limit, mechanical valve 99 is opened and blowing agent-poor material 94 is allowed to fill a section of the accumulator just in front of the plunger, as illustrated in Fig. 5. Fig. 5 represents the completion of the cycle, just before injection into the mold.

In another embodiment of the invention, with reference to Figs. 5-7, an injection-molded microcellular article having a blowing agent-poor exterior wall and a blowing agent-rich, microcellular foamed interior can be formed without the necessity of filling accumulator 78 with blowing agent-rich material sandwiched between blowing agent-poor material, as illustrated. In this embodiment blowing agent-rich material fills the mold but the distal-most part of the accumulator, defined by the nucleating pathway 67, is heated to a greater extent than is the remainder of the accumulator. This can be accomplished using heating units 103 positioned adjacent the nucleator. If needed, additional heating units can be provided to heat material in the accumulator upstream of the nucleating pathway. Material in the distal-most portion of the accumulator is heated to a great enough extent that, when the charge in the accumulator is injected into the mold, blowing agent in the highly-heated section very quickly diffuses out of the polymer and through vents (not shown) in the mold. In the polymeric material upstream of the distal-most, more highly-heated charge section, cell growth occurs to form microcellular material faster than blowing agent can diffuse out of the polymer. The distal most portion of the charge that is heated can define at least about 2% of the charge, or at least about 5%, or at least about 10%, or at least about 20% of the charge, and can be heated to a temperature at least about 10 °C higher than the average temperature of the charge, or at least about 20 °C, 40 °C. or 80°C higher than the average temperature of the charge, prior to injecting the charge into a molding chamber.

In another method, outside the scope of the claims below, a single-phase, homogeneous solution of polymeric material and blowing agent can be injected into a mold while maintaining pressure in the mold high enough to prevent nucleation. That is, injection occurs without nucleation. The homogeneous, single-phase solution then can be frozen into a solid state in the mold, and the mold opened. At this point nucleation and foaming do not occur. The molded article then can be heated to cause nucleation and foaming, for example by placement in a glycerine bath.

A variety of articles can be produced according to the invention, for example, consumer goods and industrial goods such as polymeric cutlery, automotive components, and a wide variety of other injection molded parts.

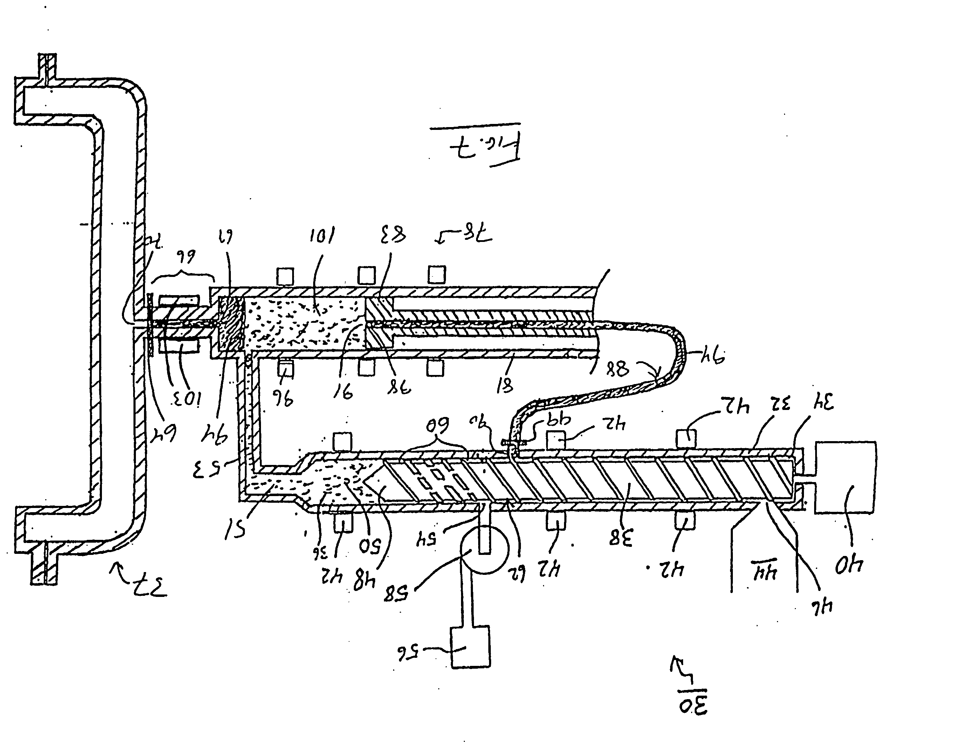

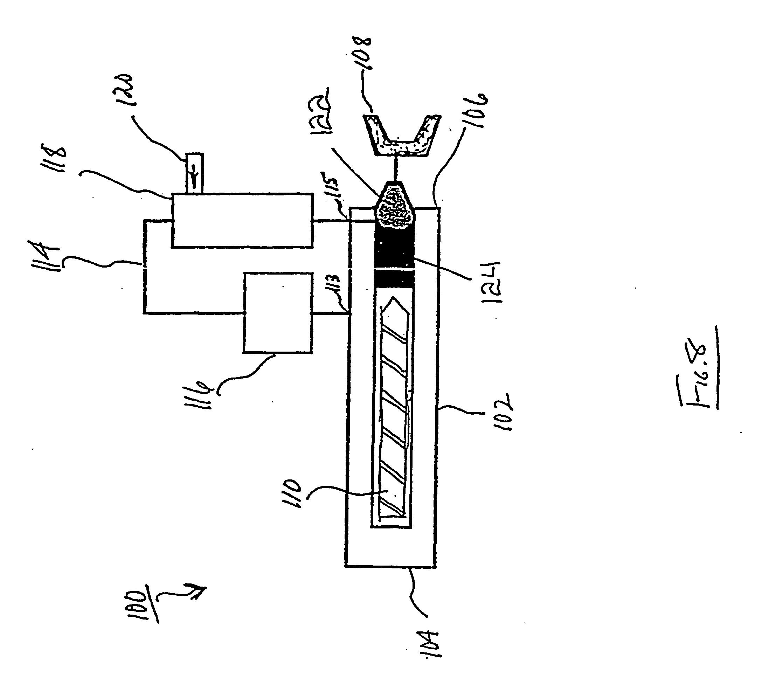

Fig. 8 illustrates schematically an injection molding system 100 according to another embodiment of the invention. Injection molding system 100 includes an extruder that can be similar to that illustrated in Fig. 1, including a barrel 102 having a first, upstream end 104 and a second, downstream end 106 connected to a molding chamber 108. Mounted for reciprocation and rotation within barrel 102 is a screw 110 operably connected, at its upstream end, to a drive motor (not illustrated). A sidestream 114, connecting an intake 113 and a port 115 of the barrel, the port downstream of the intake, includes a melt pump 116 and mixer 118 fluidly connected in sequence. Melt pump 116 can be a gear pump or a small extruder, which are known in the art.

The techniques of the invention described above can be used also in gas-assist co-injection. In this technique a precursor of microcellular material is extruded and nucleated while being introduced into a mold, as described above, while gas is injected into the melt stream in such a way as to form, in the mold, an exterior layer against the mold walls of nucleated polymeric material and a central void filled with the co-injected gas. Cell growth can be made to occur as in other embodiments. Mixer 118 includes a blowing agent injection port 120 for introducing a blowing agent therein. Mixer 118 can be a static mixer or a cavity transfer mixer, which are also known in the art. The arrangement illustrated in Fig. 8 facilitates another method of the invention that is useful for forming injection molded microcellular parts having varying material densities, as described previously. The method involves introducing into extruder barrel 102 a pre-polymeric material, melting the pre-polymeric material, and advancing molten polymeric material 124 towards the downstream end 106 of extruder 100. As the molten polymeric material 124 advances through extruder barrel 102, a portion is diverted and advanced through intake 113 into sidestream 114 by melt pump 116 (for example, after the distal end of screw 110 is retracted proximally of intake 113 of side arm 114). As the molten polymeric material in sidestream 114 advances through mixer 118, blowing agent from gas injection port 120 is introduced and mixed thoroughly therein to form a single-phase, non-nucleated solution of blowing agent and molten polymeric material which is advanced from sidestream 114 into the downstream end 106 of extruder barrel 102 through port 115, as illustrated in Fig. 8, while reciprocating screw 110 fully retracts. This creates a blowing agent-rich region 122 at the distal most end of the barrel and a blowing agent-poor region proximal of the blowing agent-rich region. The relative amount of blowing agent-rich material and a blowing agent-poor material can be controlled by the rate at which material is passed through side arm 14 and enriched with blowing agent. Thereafter, the reciprocating action of screw 110 is used to inject the blowing agent-rich, single-phase solution of non-nucleated blowing agent and molten polymeric material 122 followed by a portion of the blowing agent-poor molten polymeric material 124 into molding chamber 108.

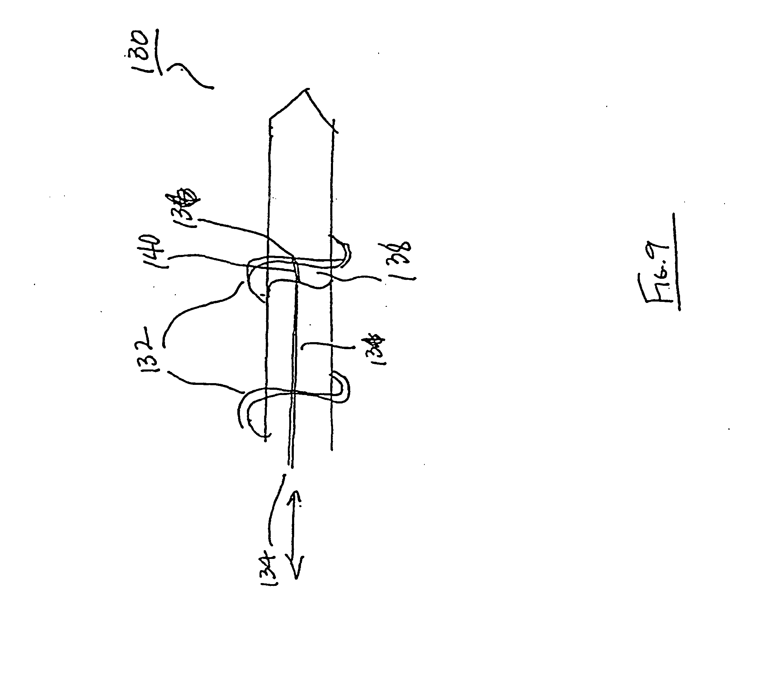

In another embodiment, the invention provides a technique for rapidly and efficiently introducing a blowing agent into a fluid polymeric precursor in injection molding apparatus as described herein, as well as in extrusion apparatus in accordance with essentially any arrangement. This embodiment includes an extrusion screw, illustrated in Fig. 9, having an orifice in a surface of the screw positionable within an extrusion barrel (not shown) that fluidly communicates with a source of blowing agent. The orifice defines the terminus of a lumen passing from a location connectable to the source, such as a location at the proximal end of the screw. In a preferred embodiment, the lumen passes longitudinally along the rotational axis of the screw from the proximal end of the screw and connects with one or more orifices on the surface of the screw. The one or more orifices preferably are located at outer surfaces of screw flights or can be slightly recessed from outer surfaces of flights, this positioning allowing introduction of blowing agent in a manner such that the blowing agent undergoes shearing/diffusion against the inner surface of the barrel. One or more orifices can be located in regions between flights as well, or a combination of orifices at a variety of locations can be used. Referring to Fig. 9, an extruder screw 130 includes a flight 132 and a lumen 134 that provides communication with an orifice 136 on an exterior surface 138 of flight 132. Portion 140 of lumen 134 passes from the lumen at the central axis of the screw to orifice 136. One advantage in the introduction of blowing agent via an orifice within a screw is that uniformity of blowing agent within a polymeric precursor can be provided in an arrangement using a reciprocating screw.

Articles can be produced having thicknesses, or cross-sectional dimension, of less than 2.5 mm (0.100 inch), preferably no more than about 1.9 mm (0.075 inch), more preferably no more than about 1.3 mm (0.050 . inch), more preferably no more than about 0.64 mm (0.025 inch), more preferably still no more than about 0.25 mm (0.010 inch), via injection molding, because a single-phase solution of polymeric precursor and supercritical fluid has a particularly low viscosity and, in this manner, can be injected into a mold and formed as a foamed article therein. For example, a single-phase solution of supercritical fluid and polymeric precursor can be introduced into a mold and a conventionally-foamed or microcellular article can be produced thereby. The low viscosity of the fluid injected into the mold allows injection-mold cycle times, as described above, of less than 10 minutes, preferably less than 5 minutes, and more preferably less than 1 minute, preferably less than 30 seconds, more preferably less than 20 seconds, more preferably less than 10 seconds, and more preferably still less than 5 seconds.

The invention provides for the production of molded microcellular polymeric articles of a shape of a molding chamber, including at least one portion have a cross-sectional dimension of no more than about 3.2 mm (0.125 inch) or, in other embodiments, smaller dimensions noted above, the article having a void volume of at least about 5%. Preferably, the void volume is at least about 10%, more preferably at least about 15%, more preferably at least about 20%, more preferably at least about 25%, and more preferably still at least about 30%. The article may have a void volume of at least about 50%. This is a significant improvement in that it is a challenge in the art to provide weight reduction in polymeric material, via foam void volume, in articles having very small dimensions. The articles include the above-noted void volumes in those sections that are of cross-sectional dimension of no more than about 3.2 mm (0.125 inch), or other, smaller dimensions noted above.

The method of the invention also allows the production of higher weight reduction, as described herein, and smaller cells in injection molded parts having thicknesses greater than 3.2 mm (0.125 inch), for example between 5mm (0.200 inch) and about 12.7mm (0.500 inch) thickness.

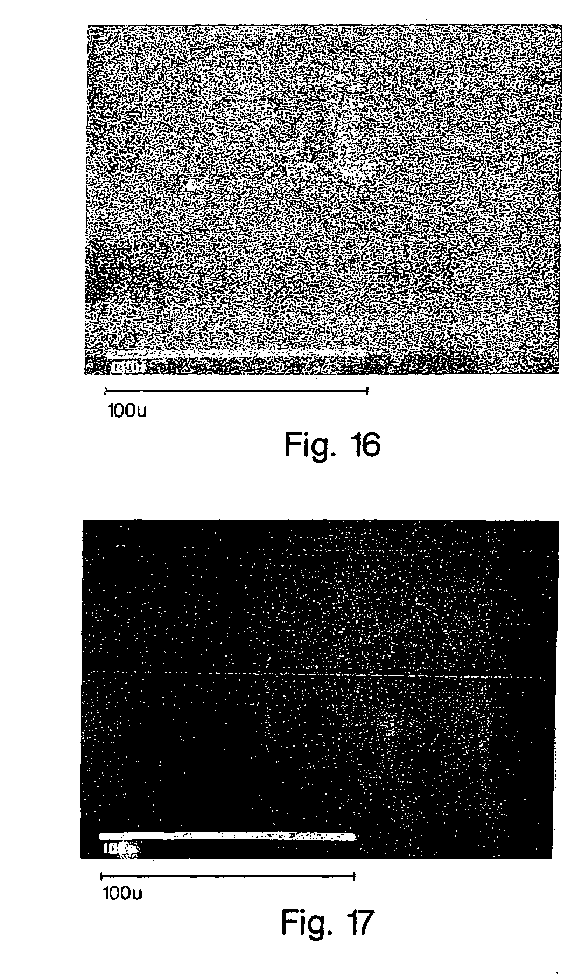

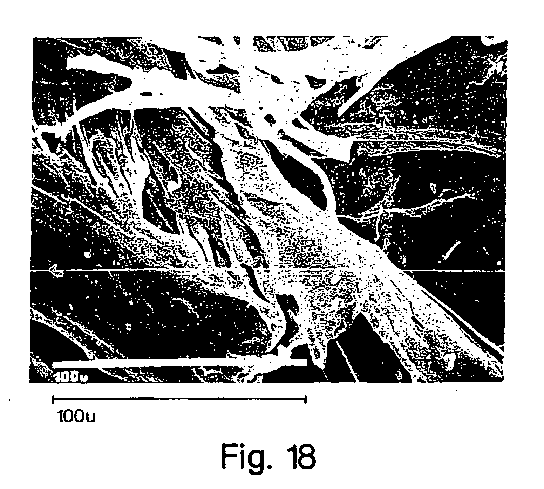

The method of the invention also allows the production of thick and thin foam molded parts with surfaces replicating solid parts. At least a portion of the surface of these parts is free of splay and swirl visible to the naked human eye. Figs. 16-18, in conjunction with Example 9 (below) demonstrate formation of polymeric parts having surfaces free of splay and a swirl visible to the naked human eye. Such molded parts can be produced when the temperature of the melt and mold temperature and a blowing agent concentration is optimized to allow blowing agent to diffuse away from the surface of the part so that the surface includes a skin layer essentially free of cells. This skin layer is essentially solid polymer, thus the part appears as a solid polymeric part appears to the naked human eye. Splay and a swirl, in foamed polymeric material, is caused by bubbles at the surface being dragged against a mold wall. Where bubbles at the surface are removed, due to temperature control, splay and a swirl is avoided. In these embodiments molded parts are produced having an outer skin of essentially solid polymeric material free of cells, having a thickness at least three times the average cell size of the foam material. Preferably, the outer skin thickness is at least about five times the average cell size of the material. Another reason that molded parts can be produced, according to the invention, that are free of visible splay and a swirl is that the diffusion rate of a supercritical fluid blowing agent is believed by the inventors to be more rapid than that of typical blowing agents, allowing diffusion at the surface of the article to occur, as described, to form a solid skin layer.

As mentioned, the invention allows the production of molded microcellular foam polymeric material having thin sections. In particular, articles having high length-to-thickness ratios can be produced. The invention allows the production of materials having length-to-thickness ratios of at least about 50:1 where the polymer has a melt index of less about 10. Preferably the length-to-thickness ratio is at least about 75:1, more preferably at least about 100:1, and more preferably still at least 150:1. An example of material having a melt index of less than about 10 is polystyrene. In another embodiment an article is provided having a length-to-thickness ratio of at least about 120:1, the polymer having melt flow rate of less than about 40. In this embodiment, the length-to-thickness is preferably at least about 150:1, more preferably at least 175:1, more preferably at least about 200:1, and more preferably still at least 250:1. An example of material with a melt flow rate less than about 40 is polyolefin such as polyethylene. Length-to-thickness ratio, in this context, defines the ratio the length of extension of a portion of a polymeric molded part extending away from the injection location in the mold (nozzle) and the thickness across that distance.

One particularly advantageous article is a thin molded part at a relatively high void volume. In particular, the invention allows the production of foam polymeric articles having a portion of thickness less than about 1.2 millimeters and a void volume of at least 30%, and even articles having a thickness of less than about 0.7 millimeters and a void volume of at least 15%.

In particular, parts can be produced having thicknesses as defined herein, at void volumes defined herein, where the maximum thickness exists over at least about 25% of the article, that is, a least about 25% of the area of a thin molded part is of a thickness less than that described; even more of the part can be of thickness less than the maximum defined, for example 50% or 100%

It is an advantage of the present invention that articles can be produced that are opaque without the use of opacifiers. This is because polymeric foam diffracts light, thus it is essentially opaque and has a white appearance. It is an advantage of the invention that microcellular foams are more opaque, and uniformly so, than conventional foams. This is a significant advantage in connection with articles constructed and arranged to contain material that is subject to destruction upon exposure to light, such as food containers. Such material can involve food consumable by animals such as humans, containing vitamins that can be destroyed upon exposure to light. While opacifiers such as pigments are typically added to articles, pigmented material is less amenable to recycling. The present invention allows the production of thin, opaque articles that include less than about 1% by weight auxiliary opacifer, preferably less than about 0.05% by weight auxiliary opacifer, and more preferably still material that is essentially free of auxiliary opacifer. "Auxiliary opacifer", in the present invention, is meant to define pigments, dyes, or other species that are designed specifically to absorb light, or talc or other materials that can block or diffract light. Those of ordinary skill in the art can test whether an additive is an opacifer. Microcellular blow molded articles have the appearance of essentially solid, white, plastic articles, which offers significant commercial appeal.

The system of the invention can include heated runners (not shown). The term "runner" as used herein, is meant to define a fluid pathway that fluidly connects the outlet end of the injection system and the molding chamber, and/or fluidly connecting various portions of the molding cavity for example where complex molded shapes are desired. Runners are known in the art. In some conventional foam injection molding systems, material left in runners hardens, and is removed with the molded part. The present invention provides runners addressed by thermal control units, such as passageways for flowing heated fluid. This is useful in accordance with certain embodiments of the present invention in which it is advantageous to maintain the polymeric article precursor material in a fluid state within the runners in order to eliminate a pressure drop that can occur if a gap in material were to occur within the runner, when, for example, hardened material has been removed. The arrangement of the invention can involve, for example, an extruder for supplying a fluid. single-phase solution of polymeric material and blowing agent, a runner which include nucleating pathway, the runner including a valve at its downstream end to be opened when the mold is to be filled and closed when the mold is to be opened and an article removed. If molten polymeric material is used, then if the runner is heated the nucleated material in the runner will remain fluid and suitable for injection into the mold. The embodiment of the invention including temperature-controlled runners can find use in any of a wide variety of injection moldings systems, involving any number of runners between various components, and valves positioned, if needed, appropriately to allow for filling molds or mold sections periodically without the need for removal and discarding of hardened material from the runners.

The function and advantage of these and other embodiments of the present invention will be more fully understood from the examples below. The following examples are intended to illustrate the benefits of the present invention, but do not exemplify the full scope of the invention. The examples below demonstrate advantages of injection molding of a charge of polymeric material and supercritical fluid blowing agent, in that articles are formed that have a surface, corresponding to an interior surface of a molding chamber, that is free of splay and swirl visible to the naked human eye.

### Example 1

A two stage injection molder (Engel manufacture) was constructed with a 32:1 l/d, 40 mm plasticizing unit which feeds melted polymer into a 40 mm plunger. The plunger and plasticizing units were connected by a spring loaded ball check joiner assembly. The plunger was able to inject into a mold through a typical pneumatically driven shut-off nozzle. Injection of supercritical CO₂ was accomplished by placing at approximately 16 to 20 diameters from the feed section an injection system that included one radially positioned port containing 176 orifices of 0.5 mm (.02 inch) diameter. The injection system included an actuated control valve to meter a mass flow rate of blowing agent at rates from 10 to 5450 g/hr (from .2 to 12 lbs/hr).

The plasticator was equipped with a two stage screw including a conventional first stage feed, barrier transition, and metering section, followed by a multi-flighted mixing section for blowing agent homogenization. The barrel was fitted with heating/cooling bands. The design allowed homogenization and cooling of the homogeneous single phase solution of polymer and gas.

The hydraulic system used to move all parts of the molding machine was modified to have a melt pressurization pressure of at least 6.9 mPa (1000 psi), but not more than 193 mPa (28,000 psi) at all times This technique controls and maintains the single phase solution of polymer and gas at all times before plastic injection into the mold.

### Example 2: Injection Molding Microcellular Polystyrene

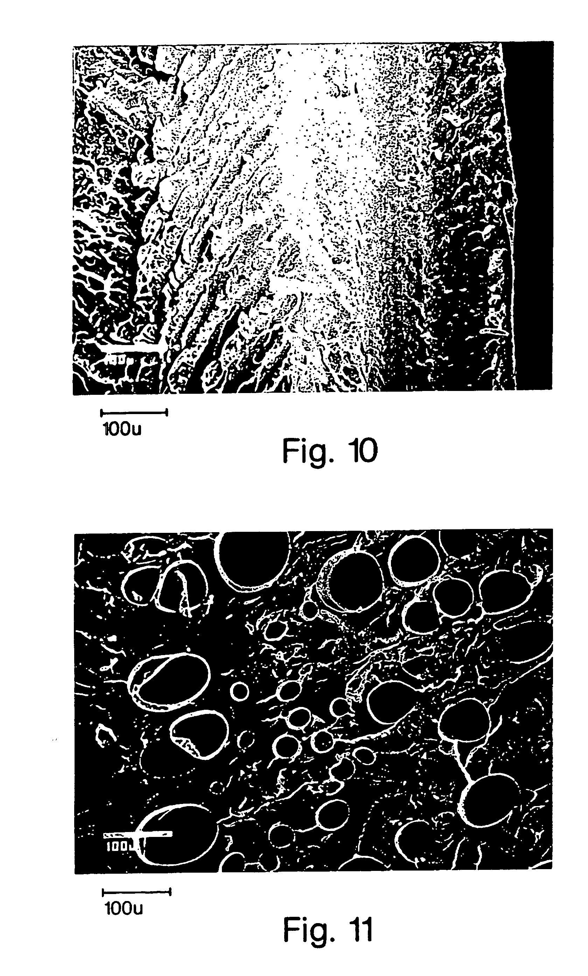

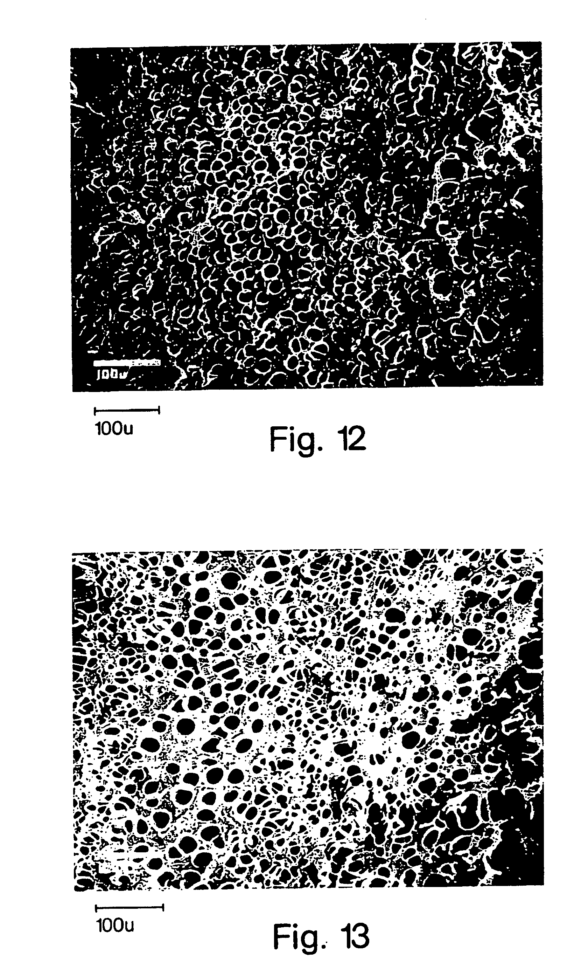

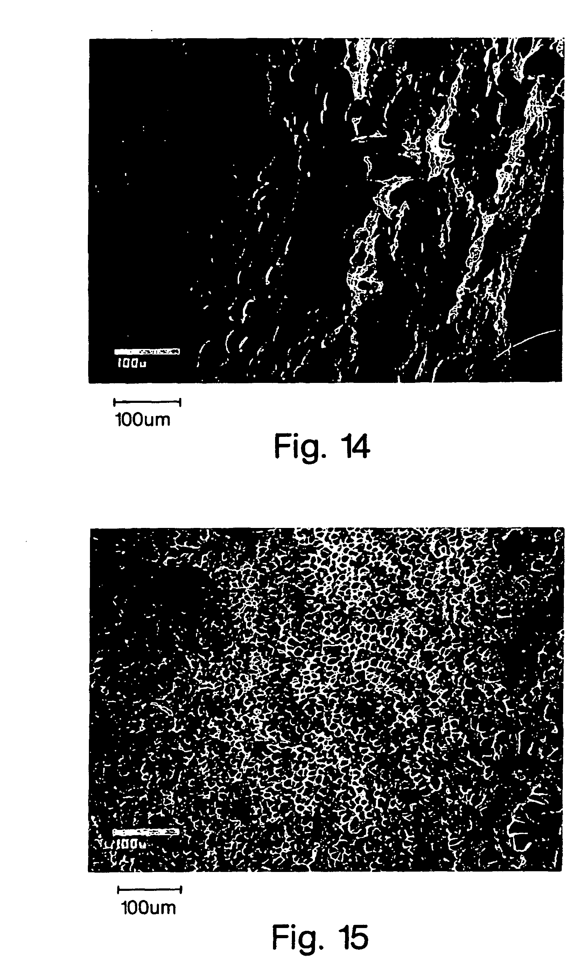

The molding machine as described in example 1 was used to mold microcellular polystyrene plaques. Polystyrene pellets (Novacor 2282, 11 M.I.) were fed into the plasticator and, in most cases, mixed with blowing agent to form a single-phase solution, then nucleated by injection into a 127 x 279 x 1.3 mm (5 x 11 x 0,55 inch) center gated plaque mold. Injection occurred through a cold sprue. Injection rate was varied to determine the relationship between the processing variables and cell size and weight reduction. Cell size was controlled to under 30 microns and weight reduction as high as 20%. See Tables 1 and 2 and corresponding Figs. 10-15.

**Table 1:**

| Effect of Injection Speed on Cell Size and Weight Reduction | | | | |
|---|---|---|---|---|
| Injection Speed ("/sec) | Cell Size (microns) | Blowing Agent (%) | Weight Reduction (%) | Fig. |
| 11 | No Cells | 11.9 | 11 | 10 |
| 5 | 100 | 11.9 | 11 | 11 |
| 4 | 10 | 11.9 | 19 | 12 |
| 2 | 10 | 11.9 | 18 | 13 |
| 1 | 30 | 11.9 | 12 | - |

**Table 2:**

| Effect of Gas Concentration on Cell Size and Weight Reduction | | | | |
|---|---|---|---|---|
| Melt temperature = 160°C | | | | |
| Mold Temperature = 66°C | | | | |
| Injection Speed = 4.0"/sec | | | | |
| Sprue = .375' diameter | | | | |

| Gas Concentration (lbs./hr) | Cell Size (microns) | Weight Reduction (%) | Blowing Agent (%) | Fig. |
|---|---|---|---|---|
| 0.9 | 20 to 150 | 21 | 134 | 14 |
| 1.4 | 1 to 5 | 23 | 21 | 15 |

### Example 3: Injection Molding Microcellular Polyethylene Terephthalate

The injection moiding machine described in example 1 was used to mold PET (Eastman, 0.95 IV) into a 5 x 11 x 5mm (.200 inch) cavity after drying for four hours at 177°C (350 F). The melt processing temperature was 288°C (550 F), the mold temperature was 66°C (151 F) and was injected with 12% CO₂. The melt pressurization pressure was maintained at 20.7 mPa (3000 psi) and the injection speed was 127 mm (5.0 inches) per second.

The weight reduction was 30% and the cell size was 30 to 40 microns in diameter.

### Example 4: Injection Molding Polypropylene to high levels of Weight Reduction

The injection molding machine described in example 1 was used to mold polypropylene (4 melt flow rate (MFR), copolymer, Montell 7523), polypropylene (20 MFR, copolymer, Montell SD-376) and a talc -filled polypropylene (4 MFR, 40% talc-filled, Montell 65f4-4) into a 127 x 279 mm (5 x 11 inch) x "variable thickness" plaque. High weight reductions were accomplished by using the following conditions:

**Table 3:**

| Material | Part Thickness (inches) | Weight Reduction (%) | Melt Temperature (F) | Gas Percent (%) | Mold Temperature (F) |
|---|---|---|---|---|---|
| 7523 | 1.3 (.050) | 14.6 | 154 (310) | 12.5 | 57 (100) |
| SD-376 | 2.5 (.100) | 30 | 160 (320) | 12 | 66 (150) |
| 65f4-4 | 2.5 (.100) | 15 5 | 166 (330) | 15 | 93 (200) |

### Example 5: Injection molding Polystyrene parts with density reductions greater than 70%

The injection moving machine described in example 1 was used to mold polystyrene under conditions similar to those found in example 2, but with mold temperatures ranging from 66 to 121°C (from 150 F to 250 F) and cooling times ranging from 3.2 to 22.8 seconds. Large density reductions were seen as follows:

**Table 4:**

| Mold Temperature (F) | Melt Temperature (F) | Cooling Time (sec) | Solid Part Density | MuCell Density | Density Reduction |
|---|---|---|---|---|---|
| 66 (150 F) | 121 (250) | 3.2 | .88 g/cc | .37 g/cc | 58% |
| 121 (250 F) | 121 (250) | 22.8 | .88 g/cc | .16 g/cc | 82% |

### Example 6: Post Mold Nucleation and Cell Growth of a Solidified Polmer/Supercritical Fluid Part

The injection molding machine described in Example 1 was used to mold polystyrene (Novacor 2282, 11 M.I.). Polystyrene pellets were fed into the plasticator and injected as described in Example 2. The material injected into the mold was cooled in the mold to a temperature below the solidification temperature of the polystyrene. The mold was opened and the part was removed in a non-foamed state. The part then was subjected to an external heat source (glycerine bath) whereupon it was nucleated and cells were grown. A microcellular article resulted.

### Example 7: Demonstration of Viscosity Reduction in Polymer Molding

This example demonstrates the advantage of using supercritical fluid blowing agent to reduce viscosity for introduction of polymeric material into a mold, at relatively low melt temperatures, while realizing the benefits of microcellular foaming.

A molding machine was used to mold polystyrene as described in Example 2 with the following exception. The mold had dimensions of 127 x 279 x 0.5mm (5 x 11 x 0.020 inches). Under the same conditions of Example 2 polystyrene was injected with 0% blowing agent. The maximum flow length obtainable was 25mm (1 inch) resulting in a length-to-thickness ratio of 50. An identical experiment was run with 15% supercritical carbon dioxide blowing agent. The maximum flow length was at least 140mm (5.5 inches) with a length-to-thickness ratio of 270.

### Example 8: Injection Molding of Polypropylene Below its Crystalline Melting Point

The injection molding machine described in Example 1 was used to mold polypropylene (4 MFR. copolymer, Montell 7523) into a 127 x 279 x 1.3mm (5 x 11 x .050 inch) mold. With 0% blowing agent, typical melt temperatures needed to fill such a mold are approximately 221°C (430° F). With 15% supercritical carbon dioxide blowing agent it was possible to inject polypropylene below its crystalline melting point which is nominally 163°C (325° F). Actual melt temperature was 154°C (310°F).

### Example 9: Demonstration of a Microcellularly Foamed Article with a Near Perfect Surface

A molding machine as described in Example 2 was used to mold polystyrene (Novacor 2282 11 M.I.). Polystyrene pellets were fed into a plasticator and mixed with CO₂ blowing agent to form a single phase solution of supercritical CO₂ and polystyrene, then nucleated by injection into a 227 x 279 x 1.3 mm (5 x 11 x .050 inch) plaque mold. Processing conditions were optimized to identify the appropriate conditions to obtain a high nucleation density, as well as a solid looking skin. Photocopies of photomicrographs are provided as Figs. 16-18 to demonstrate the effectiveness of this technique. Fig. 16 is provided for comparison, and shows solid non-foamed polystyrene, injection molded using standard, non-foam injection molding techniques.

As can be seen, ideal conditions involve a balance of melt temperature, mold temperature, and blowing agent concentration. The melt temperature must be high enough so that blowing agent diffusion rate in the melt is relatively rapid, and the mold temperature must be high enough so that blowing agent diffusion out of the melt occurs to a significant degree at the surface, but the mold temperature must be low enough to avoid warpage and other distortion of the production The blowing agent diffusion rate is dependent upon melt temperature, blowing agent concentration, differential pressure, and mold temperature. The diffusion rate of the blowing agent out of the melt must be greater than the rate at which the polymer surface cools and solidifies.

**Table 5:**

| Surface Characteristics | Fig. | Temp. Melt °C (°F) | Temp. Mold °C (°F) | Injection Speed (I.P.S.) | Blowing Agent (%) |
|---|---|---|---|---|---|
| Solid Looking | 17 | 204 (400) | 79 (175) | 5.0 | 11.50 |
| Streaks | | 177 (350) | 28 (80) | 3.0 | 5.15 |
| Bubbles | | 177 (350) | 28 (80) | 4.4 | 23% |
| Warped, Small Bubbles on Surface | | 210 (410) | 82 (180) | 2.0 | 11.50 |
| Solid, But Cracked | | 196 (385) | 71 (160) | 3.5 | 9.75 |
| Swirls | 18 | 204 (400) | 30 (87°) | 10 | 13.25% |

Those skilled in the art would readily appreciate that all parameters listed herein are meant to be exemplary and that actual parameters will depend upon the specific application for which the methods and apparatus of the present invention are used. It is, therefore, to be understood that the foregoing embodiments are presented by way of example only and that, within the scope of the appended claims and equivalents thereto, the invention may be practiced otherwise than as specifically described.

## Claims

1. A system (30) for producing injection-molded microcellular material, comprising:
an extruder having an outlet at an outlet end (36) thereof designed to release a non-nucleated, homogeneous, fluid, single-phase solution of a polymeric material and a blowing agent;
a molding chamber (37) having an inlet; and
a nucleating pathway (67) having a receiving end (69) in fluid communication with the extruder outlet and a releasing end (70) in direct fluid communication with the molding chamber inlet,
wherein the system is constructed and arranged to subject the single-phase solution to a pressure drop at a rate sufficient to cause nucleation while passing the solution through the nucleating pathway into the molding chamber.

2. A system as in claim 1, wherein the releasing end defines an orifice of the molding chamber.

3. A system as in claim 1, further comprising an accumulator (50) upstream of the nucleating pathway, said accumulator constructed and arranged to accumulate the single-phase solution.

4. A system as in claim 1, wherein the molding chamber is constructed and arranged to contain the nucleated polymeric material at an elevated pressure, thereby controlling cell growth at the elevated pressure.

5. A system as in claim 4, wherein the molding chamber is provided with fluid pressurizing means to contain the nucleated polymeric material at the elevated pressure.

6. A system as in claim 4, wherein the molding chamber is provided with mechanical pressurizing means to contain the nucleated polymeric material at the elevated pressure.

7. A system as in claim 3, wherein the accumulator is defined in a region downstream of a reciprocating screw (38) in a barrel (32) to the extrusion apparatus.

8. A system as in claim 3, wherein the accumulator is defined in a region separate from the extrusion apparatus and an outlet of the extrusion apparatus is connected to an inlet (79) of the accumulator.

9. A system as in claim 1, wherein the nucleating pathway changes in cross-sectional dimension along its length.

10. A system as in claim 1, further comprising a blowing agent source (56) fluidly connected to at least one blowing agent port (54) formed in the extruder.

11. A system as in claim 10, wherein the blowing agent source is fluidly connected to more than one blowing agent port formed in the extruder.

12. A system as in claim 10, further comprising a blowing agent metering device (58) provided between the blowing agent source and the blowing agent port.

13. The system of claim 1, wherein the blowing agent source comprises carbon dioxide or nitrogen.

14. A method comprising:
injecting a fluid, single-phase solution of a precursor of a polymeric material and a blowing agent produced in an extrusion apparatus into a molding chamber (37) through a nucleating pathway (67) in direct fluid communication with said molding chamber (37), while subjecting the single-phase solution to a pressure drop at a rate sufficient to cause nucleation while passing the solution through the nucleating pathway into the molding chamber; and
allowing the mixture to solidify as a microcellular polymeric article in the molding chamber.

15. A method as in claim 14, comprising allowing the nucleated mixture to undergo cell growth, allowing the mixture to solidify in the shape of the molding chamber to form a microcellular polymeric article in the shape of the molding chamber, and removing the microcellular polymeric article from the molding chamber while allowing the microcellular polymeric article to retain the shape of the molding chamber.

16. A method as in claim 14, comprising continuously nucleating the solution by continuously subjecting the solution to a pressure drop at a rate sufficient to cause nucleation while passing the solution into the molding chamber.

17. A method as in any one of claims 14, 15 and 16, further comprising:
removing a solidified microcellular polymeric article from the molding chamber; and
in a period of less than 10 minutes, providing a second nucleated mixture in the molding chamber, allowing the second mixture to solidify in the shape of the molding chamber, and removing a second solidified microcellular polymeric article from the molding chamber.

18. A method as in claim 17, wherein the period is less than one minute.

19. A method as in claim 17, wherein the period is less than about 20 seconds.

20. A method as in any one of claims 14 to 19, further comprising heating portions of the enclosure.

21. A method as in claim 20, wherein said portions constitute the entire molding chamber.

22. A method as in claim 14, further comprising allowing the mixture to partially solidify in the shape of the molding chamber to form a first microcellular polymeric article in the shape of the molding chamber, removing the microcellular polymeric article from the molding chamber, and allowing portions of the first microcellular polymeric article to expand further to form a second microcellular polymeric article having a shape with portions that are larger than the shape of the molding chamber.

23. A method as in claim 14, further comprising accumulating the solution prior to injecting the solution through the nucleating pathway.

24. A method as in claim 23, comprising accumulating the solution in a region downstream of a reciprocating screw in a barrel of the extrusion apparatus, or in a region separate from the extrusion apparatus with an outlet of the extrusion apparatus being connected to the inlet of the accumulator.

25. A method as in claim 14, further comprising introducing blowing agent into a precursor of polymeric material in the extrusion apparatus to form a precursor of polymeric material and blowing agent mixture prior to the injection step.

26. A method as in claim 25, further comprising forming a single-phase solution from the precursor of polymeric material and blowing agent mixture prior to the injection step.

27. A method as in claim 14, wherein the solution is injected through the nucleating pathway by moving a screw in the extrusion apparatus in a downstream direction.

28. A method as in claim 14, wherein the solution is nucleated by the drop in pressure of the solution as the solution passes through the nucleating pathway into the molding chamber.

29. A method as in claim 25, wherein the blowing agent is a physical blowing agent.

30. A method as in claim 25, wherein the blowing agent is a chemical blowing agent.

31. A method as in claim 25, wherein the blowing agent comprises carbon dioxide or nitrogen.

32. A method as in claim 14, wherein the microcellular polymeric article includes at least one portion having a cross-sectional dimension of no more than 3.17 mm (0.125 inch).

## Patentansprüche

1. System (30) zum Herstellen von gegossenem mikrozellulären Material, umfassend:
einen Extruder mit einem Auslass an dessen Auslassende (36), der zum Freigeben einer ohne erfolgte Keimbildung, homogenen, fluiden Einphasenlösung eines polymeren Materials und eines Blähmittels ausgebildet ist;
eine Formkammer (37) mit einem Einlass; und
einen Keimbildungspfad (67) mit einem Einlassende (69), das in fluider Verbindung mit dem Extruderauslass steht, und einem Ausgabeende (70), das in direkter fluider Verbindung mit dem Formkammereinlass steht,
wobei das System derart aufgebaut und angeordnet ist, um die Einphasenlösung einem Druckabfall auszusetzen, und zwar mit einer Rate, die ausreichend ist, die Keimbildung zu bewirken, während die Lösung dem Keimbildungspfad entlang in die Formkammer strömt.

2. System nach Anspruch 1, wobei das Ausgabeende eine Öffnung in der Formkammer bestimmt.

3. System nach Anspruch 1, umfassend einen Akkumulator (50) stromaufwärts des Keimbildungspfades, wobei der Akkumulator zum Akkumulieren der Einphasenlösung aufgebaut und angeordnet ist.

4. System nach Anspruch 1, wobei die Formkammer derart aufgebaut und angeordnet ist, das nach erfolgter Keimbildung polymere Material bei einem erhöhten Druck zu enthalten, wodurch das Zellwachstum bei dem erhöhten Druck kontrolliert wird.

5. System nach Anspruch 4, wobei die Formkammer mit einem fluiden Druckmittel versehen ist, um das nach erfolgter Keimbildung polymere Material bei dem erhöhten Druck zu enthalten.

6. System nach Anspruch 4, wobei die Formkammer mit einem mechanischen Druckmittel versehen ist, um das nach erfolgter Keimbildung polymere Material bei dem erhöhten Druck zu enthalten.

7. System nach Anspruch 3, wobei der Akkumulator in einem Bereich stromabwärts einer sich hin- und herbewegenden Schnecke (38) in einem Zylinder (32) der Extrusionsvorrichtung bestimmt ist.

8. System nach Anspruch 3, wobei der Akkumulator in einem Bereich bestimmt ist, der getrennt von der Extrusionsvorrichtung ist, und wobei ein Auslass der Extrusionsvorrichtung mit einem Einlass (79) des Akkumulators verbunden ist.

9. System nach Anspruch 1, wobei der Keimbildungspfad seine Querschnittsabmessung in Längsrichtung ändert.

10. System nach Anspruch 1, des weiteren umfassend eine Blähmittelquelle (56), die auf fluide Weise mit zumindest einem in dem Extruder gebildeten Blähmittelanschluss (54) verbunden ist.

11. System nach Anspruch 10, wobei die Blähmittelquelle auf fluide Weise mit mehr als einem in dem Extruder gebildeten Blähmittelanschluss verbunden ist.

12. System nach Anspruch 10, des weiteren umfassend eine Blähmitteldosiervorrichtung (58), die zwischen der Blähmittelquelle und dem Blähmittelanschluss vorgesehen ist.

13. System nach Anspruch 1, wobei die Blähmittelquelle Kohlenstoffdioxid oder Stickstoff aufweist.

14. Verfahren mit den Schritten: Einspritzen einer fluiden Einphasenlösung einer Vorstufe an polymerem Material und eines in einer Extrusionsvorrichtung hergestellten Blähmittels in eine Formkammer (37) durch einen Keimbildungspfad (67), der in direkter fluider Verbindung mit der Formkammer (37) steht, während die Einphasenlösung einem Druckabfall ausgesetzt wird, und zwar mit einer Rate, die ausreicht, eine Keimbildung zu bewirken, während die Lösung durch den Keimbildungspfad in die Formkammer strömt; und
Verfestigenlassen des Gemisches zu einem mikrozellulären polymeren Gegenstand in der Formkammer.

15. Verfahren nach Anspruch 14, des weiteren mit den Schritten:
Ermöglichen eines Zellwachstums nach erfolgter Keimbildung in dem Gemisch, Verfestigenlassen des Gemisches zu der Form der Formkammer, um einen mikrozellulären polymeren Gegenstand in der Form der Formkammer zu bilden, und Entfernen des mikrozellulären polymeren Gegenstands aus der Formkammer, während dem mikrozellulären polymeren Gegenstand gestattet wird, die Form der Formkammer beizubehalten.

16. Verfahren nach Anspruch 14, des weiteren mit dem Schritt: kontinuierliche Keimbildung in der Lösung durch kontinuierliches Aussetzen der Lösung einem Druckabfall, und zwar mit einer Rate, die ausreicht, die Keimbildung zu bewirken, während die Lösung in die Formkammer strömt.

17. Verfahren nach einem der Ansprüche 14, 15 und 16, des weiteren mit den Schritten:
Entfernen eines verfestigten, mikrozellulären polymeren Gegenstands aus der Formkammer; und
Vorsehen eines zweiten, nach erfolgter Keimbildung, Gemisches in der Formkammer innerhalb einer Zeitdauer von weniger als zehn Minuten, Verfestigenlassen des zweiten Gemisches in der Form der Formkammer und Entfernen eines zweiten verfestigten, mikrozellulären, polymeren Gegenstands aus der Formkammer.

18. Verfahren nach Anspruch 17, wobei die Zeitdauer weniger als eine Minute beträgt.

19. Verfahren nach Anspruch 17, wobei die Zeitdauer weniger als ungefähr 20 Sekunden beträgt.

20. Verfahren nach einem der Ansprüche 14 bis 19, des weiteren mit dem Schritt: Aufwärmen von Abschnitten des Einschlusses.

21. Verfahren nach Anspruch 20, wobei die Abschnitte die gesamte Formkammer bilden.

22. Verfahren nach Anspruch 14, des weiteren mit dem Schritt:
teilweise Verfestigenlassen des Gemisches in der Form der Formkammer, um einen ersten mikrozellulären polymeren Gegenstand in der Form der Formkammer zu bilden, Entfernen des mikrozellulären, polymeren Gegenstands aus der Formkammer, und Expandierenlassen von Abschnitten des ersten mikrozellulären polymeren Gegenstands, um einen zweiten mikrozellulären polymeren Gegenstand zu bilden mit einer Form, die Abschnitte aufweist, welche größer sind als die Form der Formkammer.

23. Verfahren nach Anspruch 14, des weiteren mit dem Schritt: Akkumulieren der Lösung vor dem Einspritzen der Lösung durch den Keimbildungspfad.

24. Verfahren nach Anspruch 23, des weiteren mit dem Schritt: Akkumulieren der Lösung in einem Bereich stromabwärts einer sich hin- und herbewegenden Schnecke in einem Zylinder der Extrusionsvorrichtung, oder in einem Bereich, der getrennt von der Extrusionsvorrichtung ist, wobei ein Auslass der Extrusionsvorrichtung mit dem Einlass des Akkumulators verbunden ist.

25. Verfahren nach Anspruch 14, des weiteren mit dem Schritt: Einführen eines Blähmittels in eine Vorstufe an polymeren Material in der Extrusionsvorrichtung, um ein Vorstufengemisch aus Polymermaterial und Blähmittel vor dem Einspritzschritt zu bilden.

26. Verfahren nach Anspruch 25, des weiteren mit dem Schritt: Bilden einer Einphasenlösung aus dem Vorstufengemisch aus polymerem Material und Blähmittel vor dem Einspritzschritt.

27. Verfahren nach Anspruch 14, wobei die Lösung durch den Keimbildungspfad dadurch eingespritzt wird, indem eine Schnecke in der Extrusionsvorrichtung in stromabwärtiger Richtung bewegt wird.

28. Verfahren nach Anspruch 14, wobei die Keimbildung in der Lösung durch den Druckabfall der Lösung bewirkt wird, während die Lösung durch den Keimbildungspfad in die Formkammer strömt.

29. Verfahren nach Anspruch 25, wobei das Blähmittel ein physikalisches Blähmittel ist.

30. Verfahren nach Anspruch 25, wobei das Blähmittel ein chemisches Blähmittel ist.

31. Verfahren nach Anspruch 25, wobei das Blähmittel Kohlenstoffdioxid oder Stickstoff aufweist.

32. Verfahren nach Anspruch 14, wobei der mikrozelluläre polymere Gegenstand zumindest einen Abschnitt mit einer Querschnittsabmessung von nicht mehr als 3,17 mm (0,125 inch) umfasst.

## Revendications

1. Système (30) de production d'une matière microcellulaire moulée par injection, comprenant :
une machine d'extrusion ayant une sortie à une extrémité de sortie (36) de celle-ci conçue pour libérer une solution monophasée, non nucléée, homogène, fluide, d'un matériau polymère et d'un agent d'expansion ;
une chambre de moulage (37) ayant une entrée ; et
une voie de nucléation (67) ayant une extrémité de réception (69) en communication de fluide avec la sortie de la machine d'extrusion et une extrémité de libération (70) en communication de fluide directe avec l'entrée de la chambre de moulage,
dans lequel le système est construit et agencé de façon à soumettre la solution monophasée à une baisse de pression à une vitesse suffisante pour provoquer la nucléation tout en faisant passer la solution à travers la voie de nucléation dans la chambre de moulage.

2. Système selon la revendication 1, dans lequel l'extrémité de libération définit un orifice de la chambre de moulage.

3. Système selon la revendication 1, comprenant, en outre, un accumulateur (50) en amont de la voie de nucléation, ledit accumulateur étant construit et agencé pour accumuler la solution monophasée.

4. Système selon la revendication 1, dans lequel la chambre de moulage est construite et agencée pour contenir le matériau polymère nucléé à une pression élevée, contrôlant ainsi la croissance des cellules à la pression élevée.

5. Système selon la revendication 4, dans lequel la chambre de moulage est équipée de moyens de mise sous pression de fluide pour contenir le matériau polymère nucléé à la pression élevée.

6. Système selon la revendication 4, dans lequel la chambre de moulage est équipée de moyens de mise sous pression mécaniques pour contenir le matériau polymère nucléé à la pression élevée.

7. Système selon la revendication 3, dans lequel l'accumulateur est défini dans une région en aval d'une vis-piston (38) dans un cylindre de plastification (32) d'un appareil d'extrusion.

8. Système selon la revendication 3, dans lequel l'accumulateur est défini dans une région séparée de l'appareil d'extrusion et une sortie de l'appareil d'extrusion est relié à une entrée (79) de l'accumulateur.

9. Système selon la revendication 1, dans lequel la voie de nucléation change de dimension transversale le long de sa longueur.

10. Système selon la revendication 1, comprenant, en outre, une source d'agent d'expansion (56) reliée en terme de fluide à au moins un orifice d'agent d'expansion (54) formé dans la machine d'extrusion.

11. Système selon la revendication 10, dans lequel la source d'agent d'expansion est reliée en terme de fluide à plus d'un orifice d'agent d'expansion formé dans la machine d'extrusion.

12. Système selon la revendication 10, comprenant, en outre, un dispositif de mesure (58) de l'agent d'expansion prévu entre la source d'agent d'expansion et l'orifice d'agent d'expansion.

13. Système selon la revendication 1, dans lequel la source d'agent d'expansion comprend du dioxyde de carbone ou de l'azote.

14. Procédé comprenant :
l'injection d'une solution monophasée fluide d'un précurseur d'un matériau polymère et d'un agent d'expansion produit dans un appareil d'extrusion dans une chambre de moulage (37) à travers une voie de nucléation (67) en communication de fluide directe avec ladite chambre de moulage (37), tout en soumettant la solution monophasée à une baisse de pression à une vitesse suffisante pour provoquer la nucléation tout en faisant passer la solution à travers la voie de nucléation dans la chambre de moulage ; et
l'action de laisser le mélange se solidifier en tant qu'article polymère microcellulaire dans la chambre de moulage.

15. Procédé selon la revendication 14, comprenant l'action de laisser le mélange nucléé subir la croissance cellulaire, laisser le mélange se solidifier sous la forme de la chambre de moulage pour former un article polymère microcellulaire sous la forme de la chambre de moulage, et le retrait de l'article polymère microcellulaire de la chambre de moulage tout en laissant l'article polymère microcellulaire garder la forme de la chambre de moulage.

16. Procédé selon la revendication 14, comprenant l'action de nucléer continuellement la solution en soumettant continuellement la solution à une baisse de pression à une vitesse suffisante pour provoquer la nucléation tout en faisant passer la solution dans la chambre de moulage.

17. Procédé selon l'une quelconque des revendications 14, 15 et 16, comprenant en outre :
le retrait d'un article polymère microcellulaire solidifié de la chambre de moulage ; et
dans une période de moins de 10 minutes, la fourniture d'un second mélange nucléé dans la chambre de moulage, l'action de permettre au second mélange de se solidifier sous la forme de la chambre de moulage, et le retrait d'un second article polymère microcellulaire solidifié de la chambre de moulage.

18. Procédé selon la revendication 17, dans lequel la période est inférieure à une minute.

19. Procédé selon la revendication 17, dans lequel la période est inférieure à 20 secondes.

20. Procédé selon l'une quelconque des revendications 14 à 19, comprenant, en outre, des parties chauffantes de l'enveloppe.

21. Procédé selon la revendication 20, dans lequel lesdites parties constituent l'intégralité de la chambre de moulage.

22. Procédé selon la revendication 14, comprenant, en outre, l'action de laisser le mélange se solidifier partiellement sous la forme de la chambre de moulage pour former un premier article polymère microcellulaire sous la forme de la chambre de moulage, le retrait de l'article polymère microcellulaire de la chambre de moulage, et l'action de laisser des parties du premier article polymère microcellulaire gonfler davantage pour former ensuite un second article polymère microcellulaire ayant une forme avec des parties qui sont plus grandes que la forme de la chambre de moulage.

23. Procédé selon la revendication 14, comprenant, en outre, l'accumulation de la solution avant l'injection de la solution à travers la voie de nucléation.

24. Procédé selon la revendication 23, comprenant, en outre, l'accumulation de la solution dans une région en aval de la vis-piston dans un cylindre de plastification de l'appareil d'extrusion, ou dans une région séparée de l'appareil d'extrusion avec une sortie de l'appareil d'extrusion relié à une entrée de l'accumulateur

25. Procédé selon la revendication 14, comprenant, en outre, l'introduction d'un agent d'expansion dans un précurseur d'un matériau polymère dans l'appareil d'extrusion pour former un mélange d'un précurseur de matériau polymère et d'agent d'expansion avant l'étape d'injection.

26. Procédé selon la revendication 25, comprenant, en outre, la formation d'une solution monophasée à partir du mélange du précurseur du matériau polymère et d'agent d'expansion avant l'étape d'injection.

27. Procédé selon la revendication 14, dans lequel la solution est injectée à travers la voie de nucléation en déplaçant la vis dans l'appareil d'extrusion dans un sens aval.

28. Procédé selon la revendication 14, dans lequel la solution est nucléée par la baisse de pression de la solution au fur et à mesure que la solution passe à travers la voie de nucléation dans la chambre de moulage.

29. Procédé selon la revendication 25, dans lequel l'agent d'expansion est un agent d'expansion physique.

30. Procédé selon la revendication 25, dans lequel l'agent d'expansion est un agent d'expansion chimique.

31. Procédé selon la revendication 25, dans lequel l'agent d'expansion comprend du dioxyde de carbone ou de l'azote.

32. Procédé selon la revendication 14, dans lequel l'article polymère microcellulaire comprend au moins une partie ayant une dimension transversale n'excédant pas 3,17 mm (0,125 pouces).
